# EUROPEAN PATENT APPLICATION

(11) **EP 1 746 409 A1**
(43) Date of publication of application: **24.01.2007**
(21) Application number: 05739011.4
(22) Date of filing: 28.04.2005
(51) Int. Cl.: G01N 21/27, G01N 21/01, G01N 21/35, G01N 21/85

(54) **ON-LINE INTERNAL QUALITY EXAMINING METHOD AND DEVICE**

(30) Priority: 10.05.2004 JP 2004140179; 21.10.2004 JP 2004307241
(71) Applicant: Maeda, Hiroshi, Hamakita-city, Shizuoka 4340045 (JP)
(72) Inventor: Maeda, Hiroshi, Hamakita-city, Shizuoka 4340045 (JP)
(74) Representative: TBK-Patent
(86) International application number: PCT/JP2005/008548
(87) International publication number: WO 2005/108956

(57) **Abstract**

To provide a method and an apparatus for inspecting, in a non-destructive manner, internal qualities such as diseases and defects and physiological defects, which cannot be seen in an appearance, along with measurement of taste component values such as a sugar degree and an acid degree of fruits, which are agricultural products. An object is conveyed by conveying means that has a transmitted light path piercing in the vertical direction in the center thereof and is provided with a seat adhering to an object in an annular shape, with a predetermined position on a conveyance path set as an inspection position, a light shielding cylinder, which vertically lowers to, adheres to, and covers an upper part of the object, is advanced synchronously with the object, and beams are projected toward the object from both left and right sides using small lamps. Upper condensing means for condensing transmitted light through the light shielding cylinder downward over the inspection position and upper spectroscopic means connected to the upper condensing means by an optical fiber are provided. Lower condensing means for condensing transmitted light upward below a transmitted light exit of the seat and lower spectroscopic means connected to the lower side condensing means by an optical fiber are provided. An analyzer that subjects spectroscopic spectrum data SA obtained from the upper side spectroscopic means and spectroscopic spectrum SB obtained from the lower side spectroscopic means to spectrum analysis, respectively, and calculates taste component values such as a sugar degree and an acid degree from the upper and the lower spectrum and detects various physiological defects and diseases and defects to output a defect degree is provided.

## Description

### Technical Field

The present invention relates to a method and an apparatus for, in order to inspect and sort external qualities and internal qualities of agricultural products or the like, inspecting, in a non-destructive manner, component values such as a sugar degree and an acid degree and internal qualities such as internal diseases and defects and physiological defects that cannot be found in appearance of objects such as the agricultural products by projecting beams to objects, which are conveyed one by one in a line by various conveying means, from both left and right sides of a conveying path in inspection positions of predetermined positions of the conveying path using plural floodlight lamps, condensing and receiving transmitted light exiting to an upper side and a lower side through the insides of the objects, and applying spectral analysis to the transmitted light.

### Background Art

Conventionally, there are a reflected light system for projecting a beam including a near infrared ray on an object agricultural product being conveyed by a conveyor and detecting internal quality information from reflected light of the agricultural product and a transmitted light system for detecting internal quality information from transmitted light of projected light that is transmitted through the inside of an agricultural product and exits to the outside.

The invention relates to an inspection method by the transmitted light system and an apparatus for the inspection method.

Among online internal quality inspection apparatuses of a transmission system, there is an online internal quality inspection apparatus provided with floodlighting means for projecting a beam on an object being conveyed and light receiving means for receiving transmitted light transmitted through the inside of the object on both left and right sides across a conveying path to be opposed to each other. (See, for example, Patent Document 1) There is also an online internal quality inspection apparatus having a vertically-piercing transmission path hole in the center of a saucer on which objects are placed one by one and provided with floodlighting means for concentratedly projecting beams on an object placed on the saucer from both left and right sides across a conveying path and light receiving means for receiving transmitted light frombelow through the transmitted light path hole of the saucer. (See, for example, Patent Document 2)

Patent Document 1: National Re-Publication of Internal Patent Application No. 00-079247 (International Publication No. WO00/79247 A1)

Patent Document 2: National Re-Publication of Internal Patent Application No. 00-022062 (International Publication No. WO01/22062 A1)

In a side multiple light-type online internal quality inspection apparatus (a side multi lamp type online inside quality inspecting device)described in the Patent Document 1, as shown in Figure 29, floodlighting means is constituted to concentratedly project one side of an object 2 on a conveying path from different positions and angles using plural floodlight lamps 1. Light receiving means 3 for receiving transmitted light transmitted through the inside of the object is provided with a light receiving shutter 5, which opens and closes a path of light, between a light receiving window 4 of a condensing lens and a light incident surface of an optical fiber.

The apparatus that transmits beams horizontally and
inspects internal qualities described in the Patent Document 1 is used for measurement of a sugar degree and an acid degree of an orange, a tomato, and the like that have a large quantity of fruit juice water content and through which light is easily transmitted. However, since fruits such as a peach and a nectarine have seed cores in fruit cores, a beam is not easily transmitted through the fruits. A beam is not easily transmitted through an apple because of a structure and components of a pulp cell. There is a problem in that it is difficult to obtain transmitted light having accurate internal quality information such as diseases and defects and physiological defects.

The floodlight lamps 1 of the floodlighting means and the condensing lens light receiving window 4 of the light receiving means 3 are arranged to be opposed to each other from the left and the right across the conveying path. Thus, in order to prevent direct light of the floodlight lamps 1 from entering from the light receiving window 4 when there is no object 2, the light receiving shutter 5 that closes a path of received light at the time of non-measurement has to be provided in the light receiving means. Thus, there is a problem in that a processing ability cannot be improved because of limitation by a mechanism for opening and closing the light receiving shutter every time one object 2 passes and an operation time of the mechanism.

In a both side multiple light-type online internal quality inspection apparatus described in the Patent Document 2, as shown in Figure 30, a saucer 7 on which an object 6 is placed has a transmission path 8 piercing in the vertical direction in the center. Floodlighting means is provided with a large number of floodlight lamps 9 on both left and right sides of a conveyance path, respectively, to concentratedly project both sides of an object on the saucer in different positions and angles, respectively. Light receiving means 10 for receiving transmitted light transmitted through the inside of the object is provided with a condensing lens that condenses the transmitted light from below through the transmission path 8 of the saucer 7 and is combined with the condensing lens to guide the transmitted light condensed by the condensing lens to a spectrograph.

The apparatus that projects beams from both lateral directions, subjects transmitted light diffused and reflected in the inside of a fruit to exit downward to spectral analysis, and inspects internal qualities described in the Patent Document 2 has been put to practical use as an apparatus that inspects a sugar degree and the like of a fruit in a non-destructive manner. However, there is a problem in that a fruit having diseases and defects in the inside cannot be simultaneously detected separately from components such as a sugar degree in one inspection.

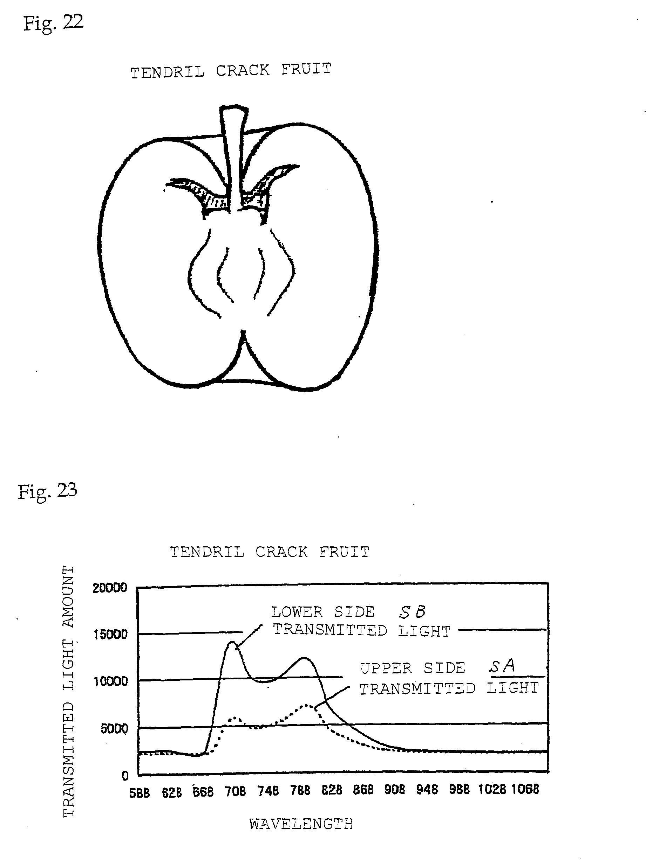

For example, concerning an apple, there is a problem in that it is impossible to detect a defective fruit (shown in Figure 22) that looks normal in appearance but in which a crack of peduncle crack occurs and a damaged fruit (a defective fruit) that mainly occurs on a fruit peduncle side of a fruit such as a depressed fruit in which a fruit peduncle sticks into a pulp. There is also a problem in that it is impossible to detect a local spot-like browning defective fruit, a position of occurrence of which in a fruit is unknown. Concerning component values such as a sugar degree and an acid degree, there is a problem in that information up to a fruit top in contact with a seat of a saucer is main information, although the information is affected by an angle and a position of an irradiation lamp below an equator portion of a fruit and a size of the fruit, basically, only information from a lower half side of an object seated on the seat is obtained, and information on an upper half side is unknown.

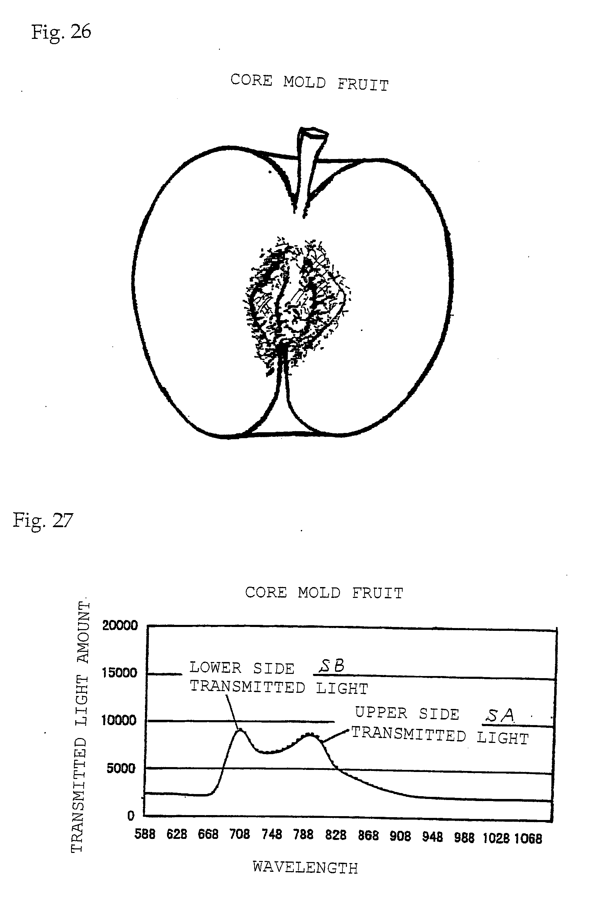

In the inspection apparatus that uses only transmitted light from below the saucer 7, there is a problem in that, for example, it is impossible to detect a core mold defective fruit (shown in Figure 26) that occurs around a seed and a skin of a fruit core portion of an apple.

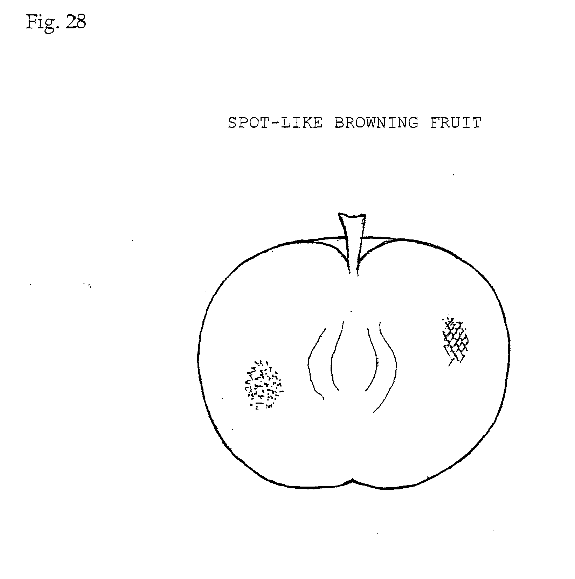

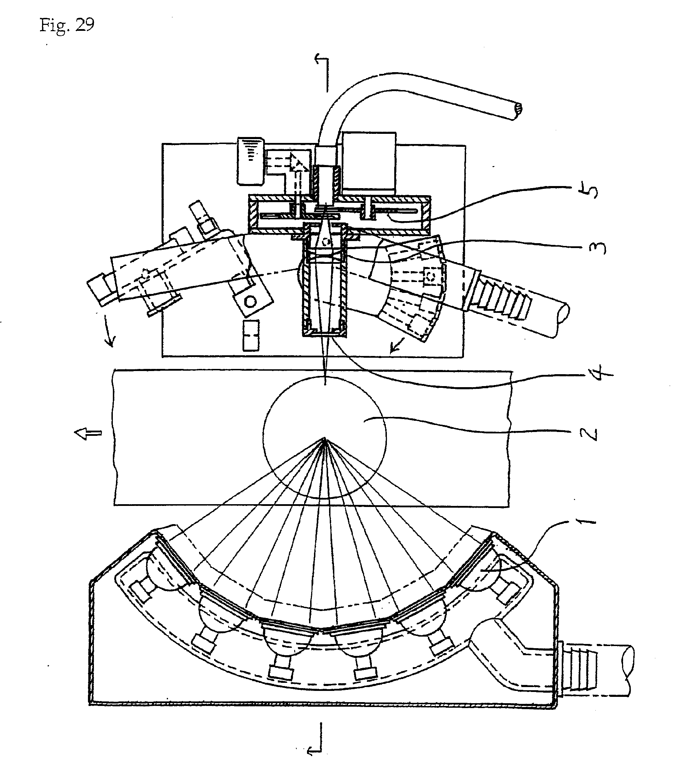

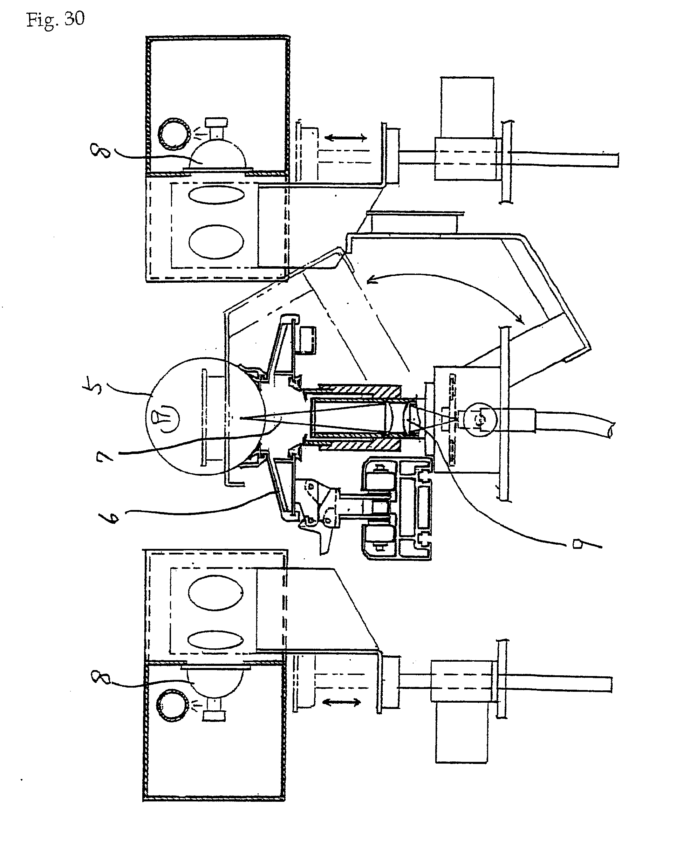

In a pear, there is a problem in that it is impossible to detect a local physiological defective fruit (shown in Figure 28) that occurs in an unspecified position in the fruit.

Moreover, there is a problem in that, since a beam projected on an object is reflected on a surface of an object, an incidence angle of the beam, a part of which enters below a fruit skin, changes according to movement of the object, and surface reflected light is reflected toward every direction, simply by providing the light receiving means, which is on the lower side, on the upper side to face downward, it is impossible to detect faint transmitted light that exits in an upward direction because this surface reflected light enters the light receiving means on the upper side as strong disturbance light.

In an idea of not providing a vertically-piercing transmitted light path in conveying means and simply providing light receiving means facing downward above an inspection position (e.g., a combination shown in Figure 9 of Japanese Patent Application Laid-Open No. 2000-199743), it is necessary to arrange a size and a posture of a measurement object in advance. This has a practical problem. In an actual sorting facility, fruits of various sizes are continuously conveyed and it is necessary to sort and classify the fruits. Objects of various sizes are conveyed in an inspection position. Therefore, surface reflection occurs from fruits adjacent to each other in the front and the rear. This strong reflected light affects upper side light receiving means as a disturbance light. Thus, there is a problem in detecting transmitted light in a near infrared region exiting from the objects.

The transmitted light from the object is faint. There is a problem in that inspection is affected by disturbance light. For example, stars in the sky are not easily seen in a place in a bright environment but is seen well in a dark place with less light.

### Disclosure of the Invention

The invention has been devised in view of such a fact and provides, in particular, an online internal quality inspection method and an apparatus for the method that are developed to simultaneously inspect, in an non-destructive manner, taste components such as a sugar degree and an acid degree of an inspection object such as an apple, a peach, or a pear and internally damaged fruits that are normal in appearance but are damaged in a fruit peduncle portion, a fruit core portion, a fruit top, or a pulp inside.

In particular, the invention provides an inspection method and an inspection apparatus that have a characteristic in a structure of upper side condensing means (also referred to as upper side light receiving means) that condenses faint transmitted light from above an object without being affected by disturbance light.

The invention provides an apparatus suitable in, depending on a difference of a structure of conveying means, including a transmitted light path piercing in the vertical direction in the center of a seat, providing lower side condensing means (also referred to as lower side light receiving means), and combining the lower side condensing means with upper side condensing means to perform inspection from above and below or providing only the upper side condensing means without using the lower side condensing means to perform inspection.

Inventions set forth in claims 1 to 5 are a method of condensing transmitted light from an object from an upper direction and a lower direction and performing inspection. In claim 1, upper side condensing means for projecting beams from both left and right sides in an inspection position and condensing transmitted light A, which is transmitted through an object and exits upward, downward from above the inspection position and upper side spectroscopic means connected to the upper side condensing means are provided. On the other hand, lower side condensing means for bringing transmitted light B, which is transmitted through an object placed on a seat and exits downward, close to a lower side of the seat in an inspection position and condensing the transmitted light B upward and lower side spectroscopic means connected to the lower side condensing means are provided. The invention of claim 1 is characterized by analyzing a spectroscopic spectrum from each of the upper side spectroscopic means and the lower side spectroscopic means to detect component values such as a sugar degree and an acid degree and various defects and comparing upper and lower spectroscopic spectra to detect internal qualities of an object and various internal defects from a difference of the spectra.

The invention of claim 2 is characterized by vertically lowering a light shielding cylinder that adheres to an upper part of an object and covers the object in an inspection position and synchronously advancing a seat on which the object is placed, providing upper condensing means for condensing transmitted light A, which is transmitted through the object and exits upward, downward from above the light shielding cylinder, condensing transmitted lights A and B adhering to the object both above and below the object and not affected by disturbance light, and detecting spectroscopic spectrum.

The inventions of claims 3 and 4 are characterized by making light receiving timing of upper and lower condensing means and spectroscopic means simultaneous or deviating positions of the condensing means and the spectroscopic means to the front and the rear to receive light at staggered timing. Claim 5 is characterized in that a light receiving time (an integrated time) is changed according to a size of a fruit diameter of an object.

In the inventions set forth in claims 6 to 10, as a seat that places inspection objects thereon one by one and conveys the inspection object, a seat that has a transmitted light path hole piercing in the vertical direction in the center thereof and adheres to the object in an upper part in an annular shape is used. A predetermined position of a conveyance path for conveying the object with this seat is set as an inspection position. A large number of small floodlight lamps are provided on both left and right sides of the conveyance path in the inspection position to project a beam to a side of the object on the seat in the inspection position. Thus, floodlighting means arranged to project beams on the object in the inspection position from different positions and angles in a range from the obliquely front to the obliquely rear on both the left and the right sides is constituted.

Upper side condensing means (also referred to as upper side light receiving means) for condensing transmitted light A, which is transmitted through the object on the seat in the inspection position and exits upward, downward from above the inspection position and upper side spectroscopic means connected to the upper side condensing means with a combination of an optical fiber are provided. This upper side condensing means may be constituted to provide a disturbance light control plate for preventing entrance of disturbance light between a lens hood and an upper part of a path through which the object passes below the lens hood and condense the transmitted light A (claim 7).

The upper side condensing means gradually lowers vertically downward to cover the upper part of the object while synchronously advancing an upper light shielding cylinder, which lowers in the vertical direction to above the object in the inspection position and adheres to the object to cover the object as another method and apparatus, in parallel to conveying means. A pressing seat that adheres to the object in an annular shape is provided in a close adhesion portion with the object of this upper light shielding cylinder. This upper light shielding cylinder covers the upper part of the object to press the object with elasticity of a spring or the like and condenses the transmitted light A from the object that exits upward through this light shielding cylinder.

Lower side condensing means (also referred to as lower side light receiving means) that is in close contact with a lower part of a lower surface transmission path exit of the seat in the inspection position (in association with a lower surface of the transmitted light path) and condenses transmitted light B, which is transmitted through the transmission light path from the object and exits downward, and lower side spectroscopic means connected to the lower side condensing means with a combination of an optical fiber are provided.

The inventions are characterized by calculating measured component values such as a sugar degree and an acid degree of an object by analyzing a spectroscopic spectrum from each of the upper side spectroscopic means and lower side spectroscopic means, detecting diseases and defects present in an upper half of the object from the analysis on the upper side spectroscopic spectrum, detecting diseases and defects present in a lower half of the object from the analysis on the lower side spectroscopic spectrum, and detecting internal defects present in a fruit core portion of the object from the spectrum analysis on the upper side and the lower side.

The upper side condensing means for condensing the transmitted light A and the lower side condensing means for condensing the transmitted light B are provided on an identical line vertically or provided with attachment positions deviated to the front and the rear in a conveying direction. In the constitution with the deviated positions, the upper side condensing means and the lower side condensing means are actuated at staggered timing to condense light when a saucer on which an object is placed comes to the respective positions, spectroscopic spectra from the respective condensing means are analyzed by an analyzer together, and predetermined internal quality inspection items are detected.

An interval of this positional deviation is within an attachment interval between seats to the front and the rear in the conveying direction or the upper side condensing means and the lower side condensing means may be provided to be deviated by an interval equal to or larger than the interval between the seats. Spectroscopic spectrum data of the condensing means are analyzed together using an analyzer.

The invention set forth in claim 10 is characterized by providing upper light shielding means for synchronously advancing a light shielding cylinder that lowers in the vertical direction and adheres to an upper part of an object and covers the object in an inspection position of conveying means for placing inspection objects one by one and conveying the inspection object in parallel to the conveying means, providing upper side condensing means (also referred to as upper side light receiving means) for condensing transmitted light from the object, which is transmitted through the upper light shielding cylinder and exits upward, downward from above the inspection position, connecting the upper side condensing means to spectroscopic means with combination of an optical fiber, and inspecting internal qualities of the object according to analysis of spectroscopic spectrum.

The invention set forth in claim 11 is characterized by vertically lowering a lower end of the light shielding cylinder of the upper light shielding means to the upper part of the object in the inspection position and synchronously advancing the light shielding cylinder in parallel to the conveying means while pressing the light shielding cylinder with a spring according to height related to a size of the object.

The invention set forth in claim 12 is characterized by forming the light shielding cylinder in a structure in which at an inspection position an upper end is held at height close to and passing a front end of a lens hood on the upper side condensing means and a pressing seat at a lower end vertically lowers from height not in contact with the object and stretches to a position adhering to the upper part of the object, attaching the light shielding cylinder to the upper light shielding means that advances synchronously with the conveying means, and constituting a stretching portion of the light shielding cylinder to be raised and lowered by a guide rail along a route of the upper light shielding means and caused to adhere to the upper part of the object while advancing at the lower end.

The inventions set forth in claims 13 and 14 are characterized by constituting a stretching mechanism of the upper light shielding cylinder as a double cylinder and bellows.

The invention set forth in claim 16 provides a disturbance light shielding plate with a view window of a condensing lens opened to prevent entrance of disturbance light is provided between a lens hood of upper side condensing means provided downward above an inspection position of conveying means and an upper part of an object path. The invention is characterized in that, floodlighting means is provided with an irradiation box covering the floodlighting means to prevent diffused light from lamps provided on both left and right sides of a conveyance path from being diffused and projected upward, this irradiation box has a light shielding wall on the object conveyance path side, a projection window is provided in the light shielding wall in a position where a floodlight axis connecting the inspection position and a floodlight lamp, through this projection window a beam is projected to a predetermined position at height of the object while being inclined downward to the front, and transmitted light condensed by condensing means is guided to spectroscopic means using an optical fiber and subjected to spectroscopic analysis.

The invention set forth in claim 17 is characterized in that a concentrated projection cylinder is provided from reflection mirror front openings of the lamps to the projection window of the light shielding wall to concentratedly project beams of the lamps along respective floodlight axes and the beams of the lamps are prevented from leaking to the outside as much as possible.

The invention set forth in claim 18 is characterized in that the spectroscopic means is constituted by forming a light exit end of the optical fiber in a flat shape and using, at a facet of the exit light end, a small package spectroscopic sensor unit (International Publication No. WO03/091676 A1) that outputs spectroscopic spectrum data in a structure in which a light diffusing body, a continuous variable interference filter (also referred to as linear viable filter (LVF)), and a photoelectric conversion element are combined and sealed in this order. This package type spectroscopic sensor unit has a characteristic in that attenuation of light is prevented because the unit is formed in a small size, for example, a size of a cigarette box containing twenty cigarettes and can be held in a palm and is provided close to the condensing means to reduce length of the optical fiber.

In the online internal quality inspection method and apparatus of the invention constituted as described above, the object is caused to adhere on the seat in an annular shape and carry, the light shielding cylinder is vertically lowered and caused to adhere to the upper part of the object in the inspection position to be advanced synchronously with the conveying means, and the upper side condensing means is provided downward above the light shielding cylinder and the lower side condensing means is provided upward on the lower surface of the saucer. Thus, a beam projected toward the lower part on the side from the obliquely front to the obliquely rear of the object travels in up and down, left and right, and oblique directions and exits to the outside as faint transmitted light while being diffused and reflected in the inside of the object. The transmitted light A traveling upward in the transmitted light comes to have internal defect information such as defects in the inside that cannot be seen from the appearance, in particular, peduncle crack, peduncle depression, and a browning fruit present in the equator portion and portions above the equator portion. Thus, it is possible to detect the internal defect information using the upper side spectroscopic means that shields disturbance light.

In the lower side condensing means provided upward to the lower surface of the seat in the inspection position, the transmitted light B traveling in the downward direction while being diffused in the inside of the object comes to have defect information such as a core mold in a fruit core portion due to bacteria intrusion from a calyx of a fruit top and a browning defective fruit. Thus, it is possible to detect the defect information with the lower side spectroscopic means.

Information on physiological defects such as a spot-like browning defect, a position of occurrence of which in an edible portion in a fruit is unknown, is also included in the transmitted lights A and B. It is possible to subject the transmitted lights A and B to spectrum analysis to detect the information.

In particular, concerning an object on a so-called gray zone that is not well analyzed only with a lower spectroscopic spectrum serving as internal defect information obtained by only the conventional lower side condensing means because an amount of information is small and judgment on a defective fruit is difficult, it is possible to compare the lower spectroscopic spectrum with an upper spectroscopic spectrum serving as internal defect information from the upper side condensing means for performing measurement simultaneously with the lower side condensing means through the light shielding cylinder that shields disturbance light and perform inspection for general judgment based on whether the spectroscopic spectra have similar shapes of unsimilar shapes, a level difference (an intensity difference) of outputs of the spectroscopic spectra, a difference of spectrum patterns, and the like. In other words, since transmitted lights in the same time frame are analyzed in response to projection at identical conveyance speed and from an identical floodlighting means as upper and lower measurement environments, it is possible to perform comparison of upper and lower spectra without an influence of disturbance light and with high reliability of spectrum data and it is possible to perform inspection at high accuracy.

Since the upper and lower condensing means condense light through the light shielding cylinder that shields disturbance light and the seat, it is possible to intensify the floodlighting means and obtain transmitted light of a higher level. Since the light receiving shutter is not provided in the upper side condensing means and the lower side condensing means, it is possible to arbitrarily set a light receiving time. In other words, it is possible to receive light by changing (calculating) a light receiving time range (width) according to a size of an object measured by the fruit diameter sensor set on the upstream side of the conveying means. Therefore, since the conveyance means is not limited by time involved in a shutter operation (limited time necessary for a mechanism to operate), it is possible to increase conveyance speed of the conveying means to improve an inspection processing ability.

The floodlighting means is surrounded by the irradiation box and the light shielding wall is provided on the conveyance path side as well to project a beam through the projection window. Thus, the beam is effectively projected on an object and it is possible to reduce scattered light to the outside.

Since the spectroscopic means uses the small package spectroscopic unit sealed from the exit light end of the optical fiber to the light diffusing body, the continuous variable interference filter, and the photoelectric conversion element, there is no reflecting mirror and diffraction grating in the inside of the spectroscopic means and there is no fixed space in an optical path. Thus, even if the spectroscopic means receives an external impact such as vibration, disorder such as deviation of an optical axis or a wavelength does not occur and the spectroscopic means is not affected by the environment. Since the spectroscopic means is set near the condensing means to reduce length of the optical fiber because of the small size, it is possible to perform stable inspection with less attenuation of transmitted light and high spectroscopic accuracy.

A large number of sorting facilities using various sorting conveyors are used in various places. It is possible to easily additionally combine the floodlighting means and the upper light shielding means or the disturbance light control plate and the upper side condensing means of the present invention with these existing conveying means. If the floodlighting means and the upper light shielding means or the disturbance light control plate and the upper side condensing means are additionally attached and combined, it is possible to obtain a sorting apparatus for inspecting internal qualities with high inspection accuracy with disturbance light removed as in the invention. Thus, an economical effect of the invention is extremely large.

### Brief Description of the Drawings

Figure 1 is a sectional explanatory view of upper and lower condensers with a main part fractured;
Figure 2 is a side explanatory view of Figure 1;
Figure 3 is a plan explanatory view with a main part fractured;
Figure 4 is a sectional explanatory view of upper and lower condensers having different upper light shielding cylinders;
Figure 5 is a side explanatory view of Figure 4;
Figure 6 is a sectional explanatory view of upper and lower condensers further having different upper light shielding cylinders;
Figure 7 is a schematic explanatory view showing an overall structure;
Figure 8 is a side explanatory view in which upper and lower detection positions are deviated to the front and the rear;
Figure 9 is a sectional explanatory view of an upper condenser with a main part fractured;
Figure 10 is a side explanatory view of Figure 8;
Figure 11 is a sectional explanatory view of an upper condenser further having a different upper light shielding cylinder;
Figure 12 is a sectional explanatory view in which a disturbance light shielding plate is provided;
Figure 13 is a side explanatory view of Figure 12;
Figure 14 is a plan view of floodlighting means;
Figure 15 is a sectional view in which a floodlight shutter is different;
Figure 16 is a side explanatory view of Figure 15;
Figure 17 is an explanatory diagram of conveying means in a fifth embodiment;
Figure 18 is an explanatory diagram of filter switching means;
Figure 19 is an explanatory diagram of a package-type spectroscopic sensor unit;
Figure 20 is a sectional view showing an example of a normal fruit of an apple;
Figure 21 is an example of a transmitted light spectrum of a normal fruit of an apple;
Figure 22 is a sectional view showing an example of a peduncle crack defective fruit of an apple;
Figure 23 is an example of a transmitted light spectrum of a peduncle crack fruit of an apple;
Figure 24 is a sectional view showing an example of a browning defective fruit of an apple;
Figure 25 is an example of a transmitted light spectrum of a browning fruit of an apple;
Figure 26 is a sectional view showing an example of a core mold disease fruit of an apple;
Figure 27 is an example of a transmitted light of a core mold fruit of an apple;
Figure 28 is a sectional view showing an example of a spot-like browning fruit of a pear;
Figure 29 is a reference diagram of the Patent Document 1 disclosed; and
Figure 30 is a reference diagram of the Patent Document 2 disclosed.

### Best Mode for Carrying Out the Invention

As a seat for placing inspection objects thereon one by one and conveying the inspection object, there are various forms such as a system for attaching the seat to a conveyor chain to convey the inspection object, a system for placing the seat on a tray to convey the inspection object, and a system for drilling a hole in a belt conveyor or a slat conveyor and providing the seat to convey the inspection object. A seat that has a transmitted light path hole piercing in the vertical direction in the center thereof and adheres to an object in an upper part thereof in an annular shape is used.

A predetermined position of a conveying path of a conveyor that places an object on this seat and conveys the object is set as an inspection position. Upper light shielding means that synchronously advances a light shielding cylinder, which lowers in the vertical direction, adheres to, and covers an upper part of the object in the inspection position, with the conveyor is provided. Floodlighting means is provided such that beams are projected on the object from sides in the inspection position in a state in which upper and lower parts of the object are shielded from external beams by the seat on the lower side and the light shielding cylinder on the upper side. In the inspection position, upper side condensingmeans is provided downward above the upper side light shielding cylinder and upper side spectroscopic means connected to the upper side condensing means is provided. Lower side condensing means is provided upward near a lower exit of a lower surface transmitted light path hole of the seat and lower side spectroscopicmeans connectedto the lower side condensing means is provided.

As the floodlighting means, floodlighting means that has a high optical intensity using small halogen lamps and performs concentrated floodlighting toward a focus in a front inspection position with a parabolic reflector designed to emit a beam flux with small spread is used.

The plural lamps are arranged to project beams from different positions and angles from both left and right sides of the conveyance path toward sides of the object. An irradiation box covering the lamps to prevent diffused light from the lamps from being diffused and projected upward is provided. This irradiation box has a light shielding wall on the object conveyance path side. A projection window is provided on a wall surface in a position where a floodlight optical axis connecting the inspection position and a floodlighting lamp. A beam is projected on the object through this projection window. A floodlight shutter that shields a projected beam from the lamps is provided in this projection window such that a floodlight beams can be temporarily shielded when it is necessary to shield the floodlight beams, for example, at the time of adjustment or maintenance of an apparatus.

The light shielding cylinder of the upper light shielding means that synchronously advances in parallel to the conveyor is lifted upward and retracted in places other than the inspection position, gradually starts to lower on the front side of the inspection position, and is guided by a guide rail to completely cover any object ranging from a high object to a low object. A difference of height of the high object and the low object is absorbed by a spring.

The light shielding cylinder on the upper side gradually lowers in the vertical direction while synchronously advancing in parallel to the conveyor and gradually comes into contact with the object. Thus, there is no speed difference between a lower end pressing seat of the light shielding cylinder and the object. The light shielding cylinder stably covers the object without inclining, toppling, or kicking the object.

The upper side condensing means uses a condensing lens having a place of substantially an identical size with an inner diameter of the light shielding cylinder as a field of view. An optical fiber combining and attaching unit is provided in a lens holder to which prevention of ghost and flare due to light from the outside of the field of view is applied.

A light incidence surface of an optical fiber bundle guided to the spectroscopic means is combined in a position of a focus on a light receiving side of the condensing lens to guide the condensed transmitted light A to the upper side spectroscopic means through the optical fiber bundle and subject the transmitted light A to spectroscopy to obtain a spectroscopic spectrum SA.

The lower side condensing means uses a condensing lens having a size (a diameter) of a lower surface transmitted light path of the seat conveyed as a field of view. As in the upper side condensing means, an optical fiber combining and attaching unit is provided in a lens holder to guide the condensed transmitted light B to the lower side spectroscopic means through the optical fiber and subject the transmitted light B to spectroscopy to obtain a spectroscopic spectrum SB.

Various kinds of analysis processing are performed using the upper side spectroscopic spectrum SA and the lower side spectroscopic spectrum SB of the identical object in an analyzer to output component values of inspection measurement items of internal qualities and defect values of internal defects and defect items. It is preferable to provide a monitor in a display of the analyzer such that the upper side spectroscopic spectrum SA and the lower side spectroscopic spectrum SB can be displayed side by side or can be superimposed.

Filter switching and inserting means is provided between the condensing lens and the optical fiber light incidence surface in the lens holder and the optical fiber combining and attaching unit of each on the upper side condensing means and the lower side condensing means.

The filter switching and inserting means is constituted to switch and insert a hollow hole for allowing condensed transmitted light to pass directly, a blind hole that does not allow light to pass at all, and light extinction filters of plural stages such as 10% light extinction and 20% light extinction.

There are items from which strong transmitted light is obtained and items from which only weak transmitted light is obtained depending items of inspection objects. An object from which only weak transmitted light is obtained is measured through the hollow hole. When an item from which strong transmitted light is obtained is measured, a light extinction filter is selected and inserted to measure the item through the filter.

The blind hole portion of the filter switching and inserting means is used when a dark level output is read (checked) in performing calibration of the spectroscopic means. This filter switching means may be manually switched. However, it is preferable that the filter switching means is switched in a remote control system using a stepping motor or the like.

### First Embodiment

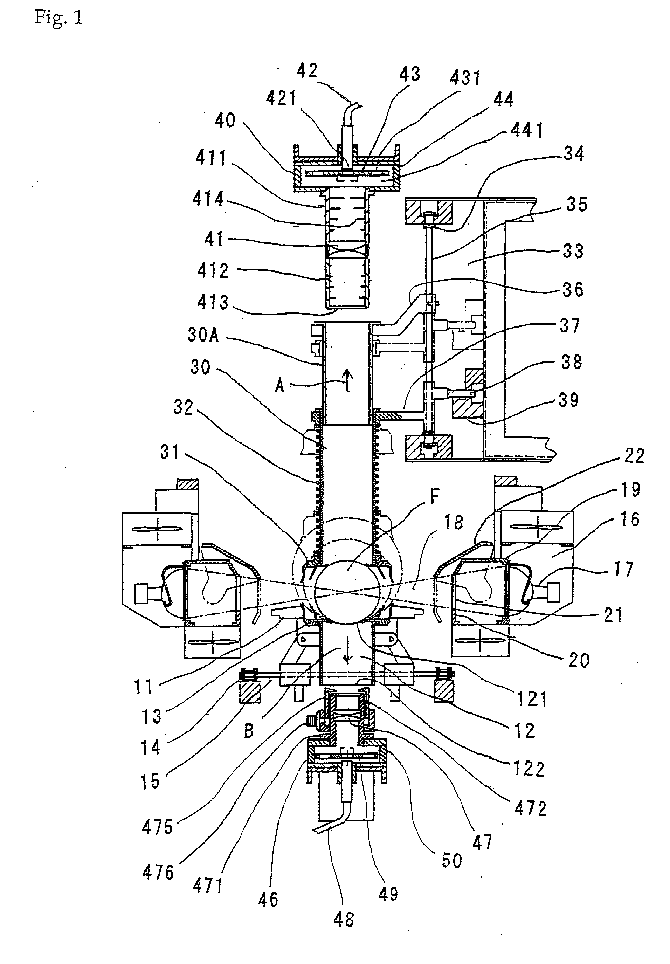

A first embodiment of the invention will be hereinafter explained in detail on the basis of Figures 1 to 7.

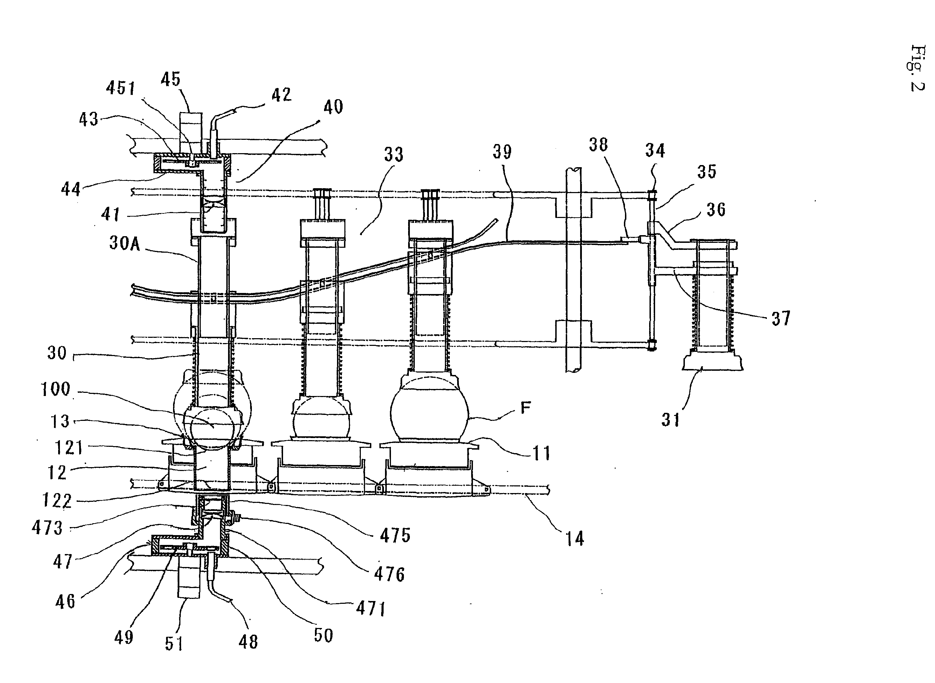

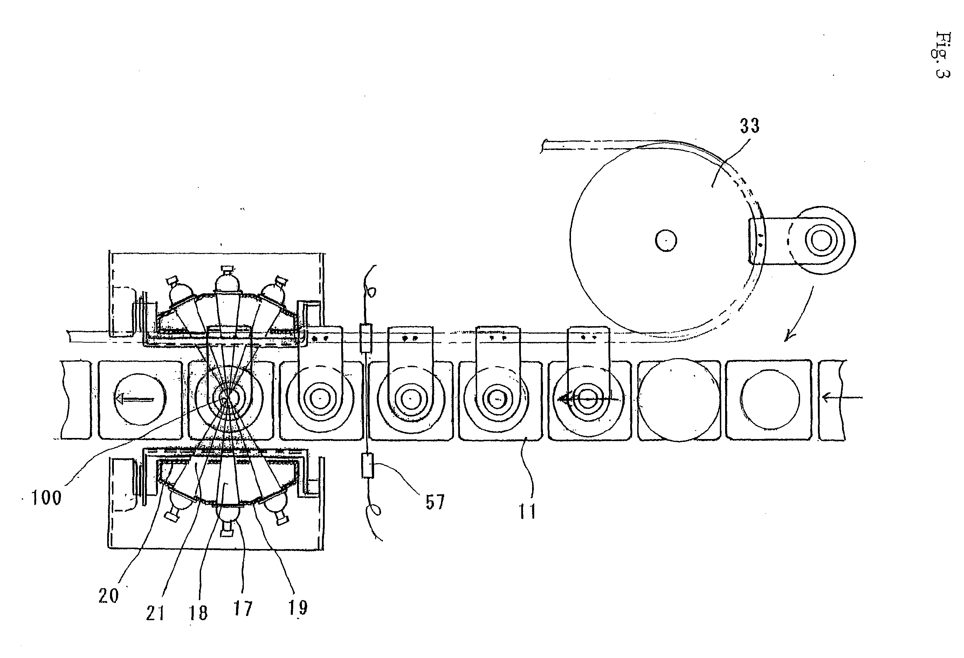

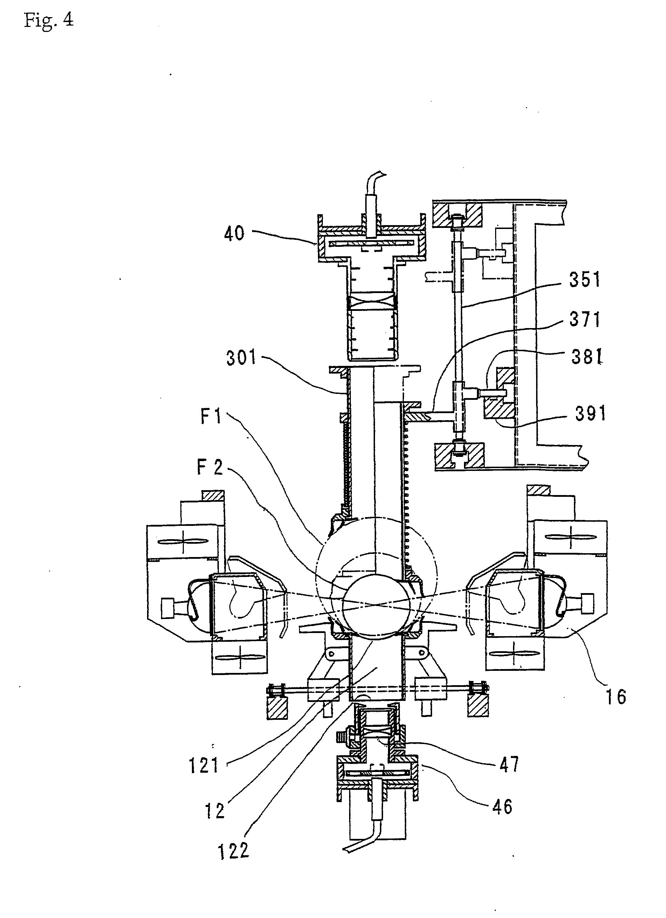

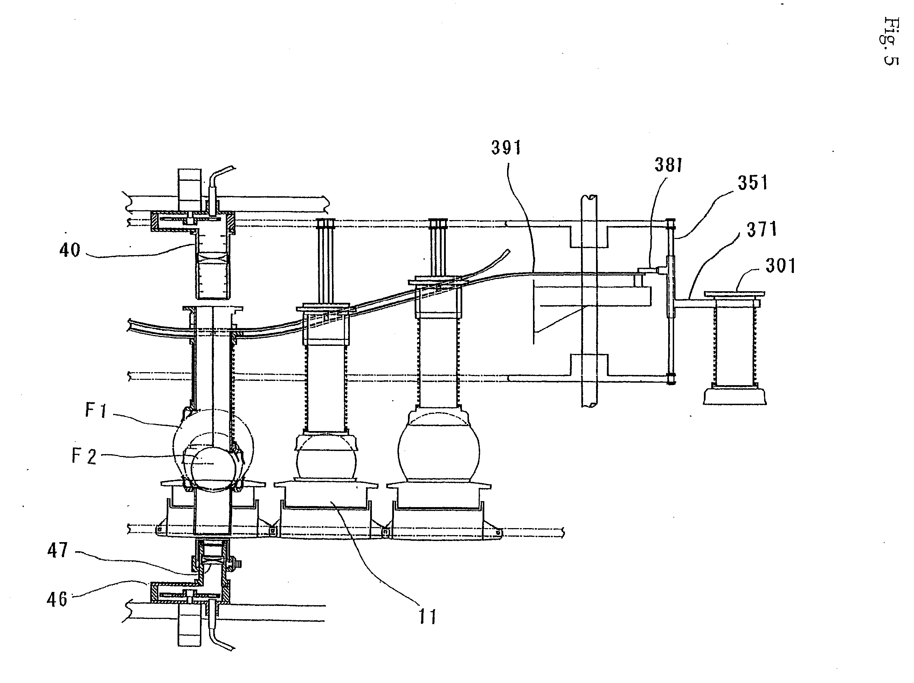

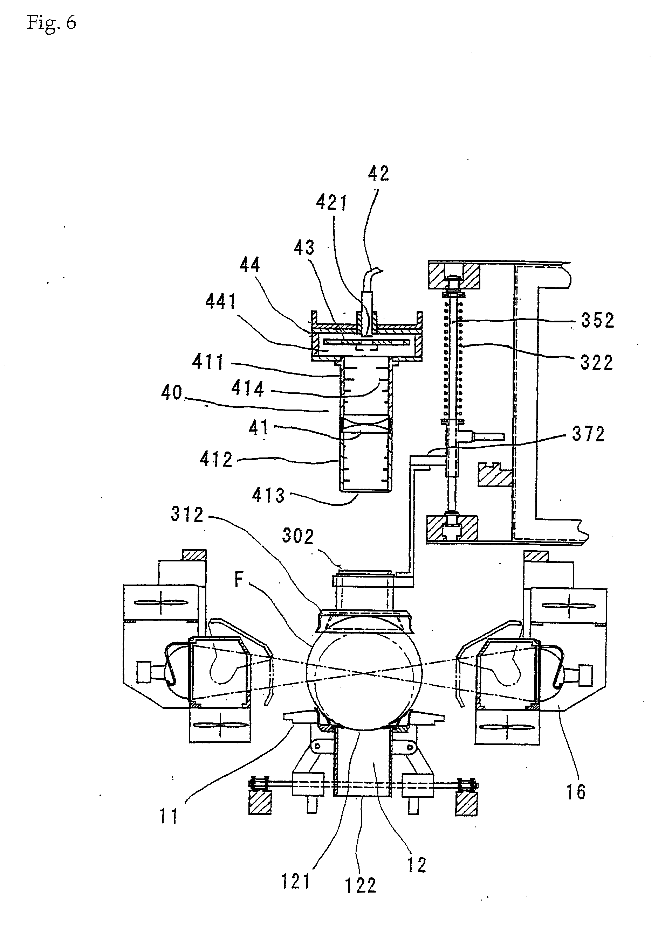

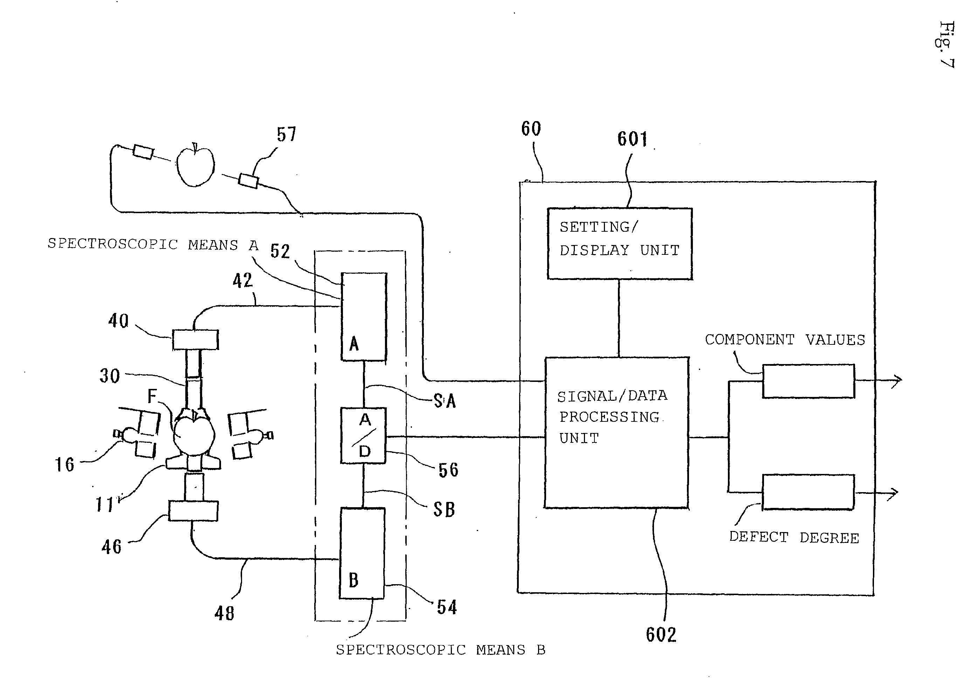

Figure 1 is a sectional explanatory view of upper and lower condenser with a main part fractured. Figure 2 is a side explanatory view of Figure 1. Figure 3 is a plan explanatory view of Figure 1. Figure 4 is a sectional explanatory view in which an upper light shielding cylinder is different. Figure 5 is a side explanatory view of Figure 4. Figure 6 is a sectional explanatory view in which an upper light shielding cylinder is further different. Figure 7 is a schematic diagram showing an overall structure.

Reference numeral 11 denotes a saucer that places inspection objects F thereon one by one and conveys the inspection object F. A transmitted light path 12 (hole) piercing in the vertical direction is provided in the center of the saucer 11 and a seat 13 on which the object F is placed is provided above the transmitted light path 12. The seat is formed such that the circumference of a transmitted light path entrance 121 adheres to the object F in an annular shape and is formed to stabilize the object F.

Reference numeral 14 denotes a conveyor chain of a conveyor that conveys the saucer 11. The saucers 11 are attached to the conveyor chain 14 at predetermined intervals using attachment pins 15 to constitute conveying means.

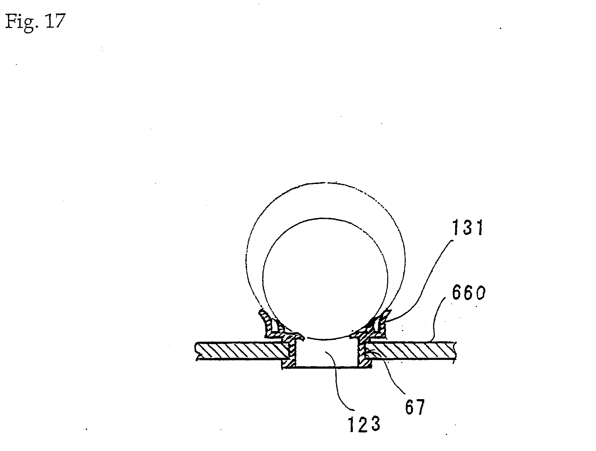

The conveying means only has to be conveying means including holes to be transmitted light paths piercing in the vertical direction in the center at fixed intervals and seats adhering to an object in an annular shape in the holes. For example, the conveying means may be conveying means obtained by drilling holes in a slat conveyor or a belt conveyor and providing seats in the holes (see Figure 17).

Reference numeral 16 denotes floodlighting means, 17 denotes a small lamp that projects a beam 18, and 19 denotes an irradiation box.

The floodlighting means 16 concentratedly projects, with a predetermined position of a saucer conveying path as an inspection position 100, the beam 18 toward the object F on the seat 13 in the inspection position 100 from both left and right sides of the inspection position 100.

It is preferable to use a halogen lamp as the small lamp 17. The small lamp 17 projects the floodlight beam 18 with a predetermined position in front as a focus using a parabolic reflecting mirror. Light is not diffused in a radial shape to the front and a beam is projected toward the front focus.

Reference numeral 20 denotes a front surface light shielding wall on the conveyance path side of the irradiation box 19. A projection window 21 is provided in a position where a floodlight axis (a center axis of a beam) connecting the small lamp 17 and the inspection position 100 in the center of the conveyance path to form a path of a projected beam from the small lamp. The small lamp 17 is attached to the rear surface of the irradiation box 19. Only a beam directed to a floodlight range (an aperture) is projected through the projection window 21 opened in the front surface light shielding wall 20 for the purpose of limiting a passing area of a beam around an optical axis.

As this projection window 21, a projection window of a rectangular shape or a long hole elongated in a lateral direction (in a traveling direction) may be formed. The projection window 21 is attached such that the floodlight beam 18 is projected on a side of the object.

Reference numeral 22 denotes a floodlight shutter that shields a beam. The floodlight shutter opens and closes the projection window 21 using a shutter driving device such as a rotary solenoid or a reciprocatingly rotating stepping motor provided on the outside of the front surface light shielding wall 20 of the projection box 19. This floodlight shutter 22 is actuated to block the projection window 21 to shield light when the saucer 11 of the conveying means is subjected to light and heat to be modified or deformed because of projection of a beam, for example, the conveyor is stopped.

In Figures 1 and 2, reference numeral 30 denotes a light shielding cylinder. The light shielding cylinder is combined with an upper side light shielding cylinder 30A, which keeps a fixed height upward, to be formed in a stretchable structure. The light shielding cylinder 30 covers the upper part of the object F with a pressing seat 31 adhering the object F provided in a contact portion with the object F at a lower end thereof. A structure of upper light shielding means that covers the object F with the light shielding cylinder 30 may be constituted as shown in Figures 4, 5, and 6 to be described later as a different example. Reference numeral 32 denotes a spring, which performs an action for causing the pressing seat 31 to adhere to the upper part of the object and cover the object with the light shielding cylinder 30 in association with an irregular change in height of the object. This pressing seat 31 forms a pair with the seat 13 on the saucer 11 to adhere to the object F in such a manner to sandwich the object F vertically in the inspection position.

Reference numeral 33 denotes upper light shielding means and 34 denotes a chain for the upper light shielding means. This chain 34 holds the light shielding cylinder 30 vertically at an identical interval (pitch) as the saucer 11 above the saucer 11 to synchronously advance the light shielding cylinder 30 with the conveyor. Reference numeral 35 denotes a vertical slide shaft provided in the chain 34. Reference numeral 36 denotes a fixed bracket attached to this vertical slide shaft 35. The fixed bracket 36 holds the upper side light shielding cylinder 30A at a fixed height.

Reference numeral 37 denotes a vertical slide bracket. The vertical slide bracket 37 slidably suspends and holds the light shielding cylinder 30 in the vertical direction. The vertical slide bracket 37 is attached to always lower the pressing seat 31 downward using the spring 32.

In this vertical slide bracket 37, a guide pin 38 is protrudingly provided on the opposite side (the rear side) of the light shielding cylinder 30 to change a suspending height of the light shielding cylinder 30 using a guide rail 39.

The light shielding cylinder 30 is gradually lowered vertically from the front side of the inspection position 100 to cover the object on the saucer 11 of the conveying means synchronously traveling in parallel below the light shielding cylinder 30. On the rear side behind the inspection position 100, the light shielding cylinder 30 gradually rises upward to lift the pressing seat 31 at the lower end thereof to a position higher than an upper limit height position of the object on the conveyance path and returns.

Figures 4 and 5 are diagrams of upper and lower condensers in which a vertical length of a light shielding cylinder 301 is fixed and the light shielding cylinder 301 is suspended and held slidably in the vertical direction in a vertical slide bracket 371. The upper side light shielding cylinder 30A and the fixed bracket 36 in Figures 1 and 2 are not provided. In this structure, since the light shielding cylinder 301 moves vertically according to a size of the object F, as shown in a fractured form in the left and the right in Figure 4, when the light shielding cylinder 301 covers a large object F1, an upper end thereof comes close to a lens hood on the upper side condensing means 40 and, when the light shielding cylinder 301 covers a small object F2, a space between the upper end and the upper side condensing means increases.

A vertical slide bracket 371 is combined with a vertical slide shaft 351 slidably in the vertical direction and a guide pin 381 is constituted to change a suspending height of the light shielding cylinder 301 using a guide rail 391. This is the same as the explanation of Figure 2 and is not further explained.

Figure 6 is an example of upper and lower condensers in which a light shielding cylinder 302 is fixedly attached to a vertical slide bracket 372 and a spring 322 for lowering a pressing sheet 312 toward the upper part of the object F is provided on a vertical slide shaft 352 side to push down the pressing seat 312 together with the vertical slide bracket 372. A structure of this example is the same as those in the other examples except that an attachment position of the spring 322 is different.

Reference numeral 40 denotes upper side condensing means. The upper side condensing means 40 includes main components, namely, a lens holder 411 in which an upper side condensing lens 41 provided downward in an upper part of an inspection position 100 is built, an upper side optical fiber 42 that guides condensed transmitted light to spectroscopic means A (not shown), and an upper side light extinction filter attaching plate 43 provided in front of a light incidence surface 421 of this upper side optical fiber 42. Reference numeral 44 denotes a combining and attaching unit for these components. The inside of the combining and attaching unit 44 forms a dark room space 441.

The upper side condensing lens 41 is built in the lens holder 411 with the upper center of the object F in the inspection position 100 set as an object side focus, in which a lens hood 412 provided at the end of the lens holder 411 is provided with a light receiving window 413, which uses a transparent glass on a front surface thereof, and forms the lens hood 412 of an angle of view having an inner diameter area of an upper opening on the upper side light shielding cylinder 30A as a field of view in a range smaller than an outer diameter (a size) of the object F.

Light shielding plates 414 of a fin shape or a groove shape are provided in multiple stages on inside wall surfaces of the lens holder 411 and the lens hood 412 to apply prevention of ghost and flare due to unnecessary light from the outside of a field of view and an angle of view and prevent disturbance light from entering the upper side optical fiber 42.

In other words, although the transmitted light A exiting from the object F is condensed and guided to the light incidence surface 421 on the upper side optical fiber 42, disturbance light which is not transmitted light, is absorbed by the light shielding plates 414 provide in the inside of the lens holder 411 to disappear and does not reach the light incidence surface 421 of the optical fiber 42.

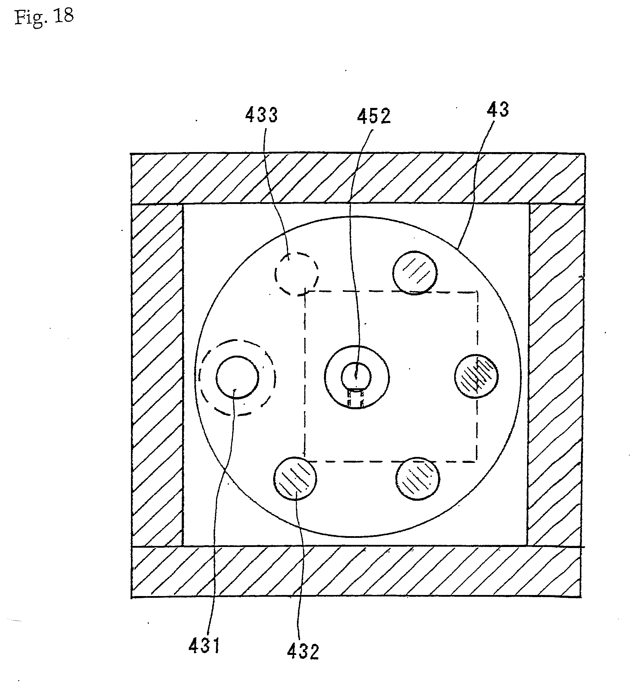

The upper side light extinction filter attaching plate 43 is, as shown in Figures 2 and 18, is disc-shaped and is a disc attached to an output shaft 451 of a stepping motor 45 provided on a side of the attaching portion on the upper side optical fiber 42 and having a size blocking an optical path of upper side transmitted light condensed on the light incidence surface 421 on the upper side optical fiber 42 from the upper side condensing lens 41.

Filter attaching holes 431 are provided in positions equally divided in plural sections as shown in Figure 18 with a shaft core 452 of the attaching portion of the output shaft 451 as a center and with a position to the center on the upper side optical fiber 42 in which the transmitted light enters as a radius. One of the filter attaching holes 431 is kept as a hollow hole, another hole is stuffed up to form a blind 433, and light extinction filters 432 having different light extinction ratios are attached to the remaining holes, respectively.

This light extinction filter attaching plate 43 is attached with optical axes of the filter attaching holes 431 adjusted between the upper side condensing lens 41 and the optical fiber light incidence surface 421.

Selection of the light extinction filter 432 of the filter attaching plate 43 is operated by actuating the stepping motor 45 to perform inching rotation according to remote control from the outside. It goes without saying that the stepping motor may be replaced with a mere manual rotation shaft.

Reference numeral 46 denotes lower side condensing means. The lower side condensing means 46 includes main components, namely, a lens holder 471 in which a lower side condensing lens 47 provided upward near a lower surface transmitted light path exit 122 of the saucer 11 below the inspection position 100 is built, a lower side optical fiber 48 that guides condensed lower side transmitted light to the spectroscopic means B (not shown), and a lower side light extinction filter attaching plate 49 provided in front of a light incidence surface of this lower side optical fiber 48. Reference numeral 50 denotes a lower side combining and attaching unit. The lower side combining and attaching unit 50 forms a dark room space as in the upper side condensing means 40.

The lower side condensing lens 47 is built in the lens holder 471 by, with the upper center of the seat 13 below the object F on the saucer 11 in the inspection position 100 as an object side focus, providing a light receiving window 473, which uses transparent glass on a front surface (an upper surface) of a lens hood 472 extending to a position close to the lower transmitted light path exit 122 of the saucer 11, at the end of the lens holder 471 and forming the lens hood 472 of an angle of view having an area of an aperture of the transmitted light path entrance 121 of the saucer 11 as a field of view.

Light shielding plates are provided in multiple stages in the insides of the lens hood 472 and the lens holder 471 to apply prevention of ghost and flare due to unnecessary light from the outside of a field of view and an angle of view and prevent disturbance light from entering the lower side optical fiber 48 as in the case on the upper side condensing means.

Reference numeral 475 denotes a dust-proof hood. The dust-proof hood 475 is formed to blow out the air from the outer periphery of the lens hood 472 toward the center direction of an outer side surface of the light receiving window 473. The dust-proof hood 475 is attached to the saucer 11 with an upper end surface thereof as close as possible to the transmitted light path exit 122 of the saucer 11.

A blast of the air is performed by connecting a not-shown blower to a connection port 476 with appropriate means. The air is blown out to an upper surface of the light receiving window 473 in this way to prevent dust and foreign matters from blocking a view.

Structures on the lower side optical fiber 48, the lower side light extinction filter attaching plate 49, the lower side combining and attaching unit 50, and a stepping motor 51 are the same as those on the upper side condensing means 40. Thus, explanations of the structures are omitted.

Spectroscopic means A 52 on the upper side connected from the upper side condensing means 40 by the upper side optical fiber 42 and spectroscopic means B 54 on the lower side connected from the lower side condensing means 46 by the lower side optical fiber 48 in Figure 7 include package-type spectroscopic sensor units 53 and 55 shown in Figure 18 and sensor driving circuits on light exit sides on the upper side optical fiber 42 and the lower side optical fiber 48, respectively.

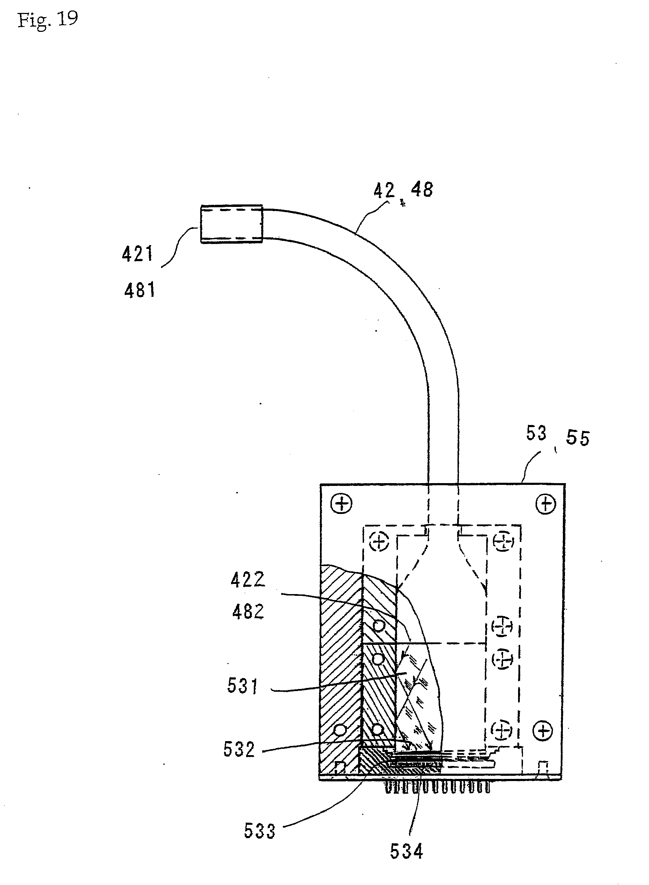

As the package-type spectroscopic sensor units 53 and 55, it is preferable to use the same package-type spectroscopic sensor unit having a structure in which, as shown in Figure 19, a light diffusing body 531, a continuous variable interference filter 532, and a photoelectric conversion element 533 are combined and sealed with light exit side ends 422, 482 on each the upper side optical fiber 42 and the lower side optical fiber 48. It is more stable and preferable to use a package-type spectroscopic sensor in which an electron cooling element 534 is combined with the photoelectric conversion element 533. It is preferable to form the upper side optical fiber 42 and the lower side optical fiber 48 short in order to prevent attenuation of light. It is preferable to provide the spectroscopic means A 52 and the spectroscopic means B 54 in positions not far from the upper side condensing means 40 and the lower side condensing means 46, respectively.

As the package-type spectroscopic sensor units 53 and 55, a package-type spectroscopic sensor unit same as that described in International Publication No. VO03/091676A1 is used. Since a space of a fixed distance is not provided between a mirror or a concave surface diffraction grating and a photoelectric converter, wavelength deviation of light exiting from an optical fiber is not caused by environmental temperature fluctuation, vibration, and the like and a stable spectroscopic performance is maintained. Therefore, it is possible to set the package-type spectroscopic sensor units 53 and 55 near the conveyor of the conveying means.

Reference numeral 56 denotes an A/D converter. The A/D converter 56 subjects an analog spectroscopic spectrum SA outputted from the spectroscopic means A 52 on the upper side and an analog spectroscopic spectrum SB outputted from the lower side spectroscopic means B 54 to A/D conversion and outputs a digital spectroscopic spectrum signal to an analyzer 60. It is preferable to provide this A/D converter 56 in a position not far from the spectroscopic means A and the spectroscopic means B for preventing attenuation of the analog spectroscopic spectrum signal SA on the upper side and the analog spectroscopic spectrum signal SB on the lower side, respectively.

If the spectroscopic means A 52 on the upper side, the spectroscopicmeans B 54 on the lower side, and the A/D converter 56 are stored in an identical box as one block, a power supply, wiring, and the like are arranged in the box orderly and it is easy to perform maintenance.

The analyzer 60 has a microcomputer board for processing signal and data. An analytical curve on the upper side and an analytical curve on the lower side are set and inputted therein in advance. The analyzer 60 receives a fruit diameter signal from a fruit diameter sensor 57 provide at a pre-stage of the inspection position 100, calculates a measurement time for the object F, and outputs operation timing of spectroscopic means. Further, the analyzer 60 receives upper and lower digital spectroscopic spectrum signals from the A/D converter 56 and analyzes and comparing upper side spectroscopic spectrum data and lower side spectroscopic spectrum data using the analytical curves, respectively, to output component values such as a sugar degree and an acid degree of inspection items and output a defect degree. The analyzer 60 outputs the component values and the defect degree for each item set in advance. Reference numeral 601 denotes a setting display unit. A personal computer obtained by combining a keyboard for setting and inputting analytical curves and various input items to data processing unit 602 and a display (CRT) is built in the setting display unit 601. Spectra, component values, and a defect degree analyzed are displayed on the display (CRT).

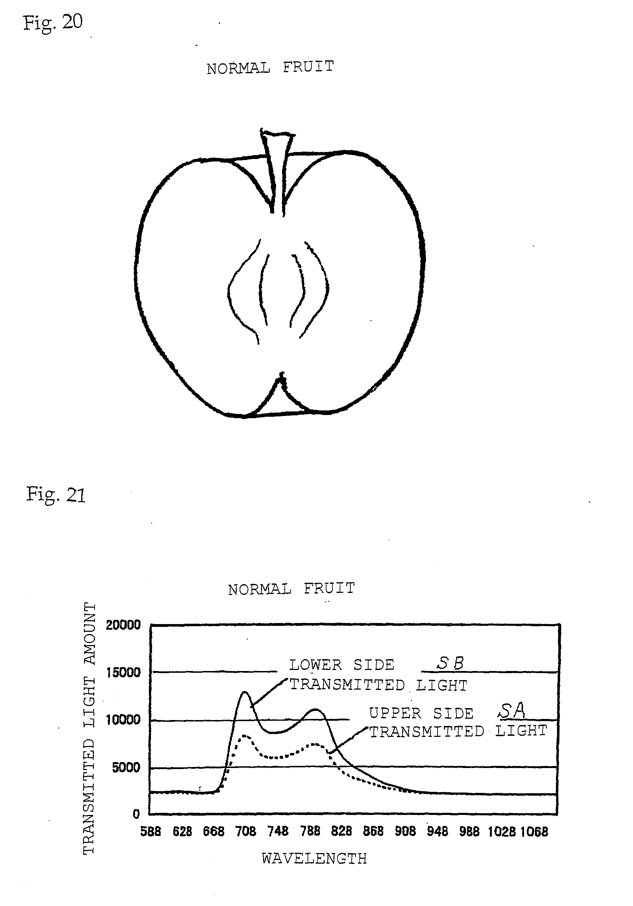

Figures 20 to 27 are vertical sectional explanatory views of a normal fruit and various defective fruits of a result inspected by the inspection apparatus with a fruit apple as an object and spectroscopic spectrum diagrams of the respective fruits. The respective spectroscopic spectrum diagrams represent a wavelength on the abscissa and a transmitted light amount on the ordinate. Figure 28 is a vertical sectional explanatory diagram of a spot-like defective fruit of a pear.

As shown in Figure 21, a spectroscopic spectrum of a normal fruit (Figure 20) has a first peak near a wavelength of 710 mm and a second peak near a wavelength of 790 mm. There is a valley of a declined spectroscopic spectrumbetween the peaks. There is a characteristic that the spectroscopic spectrum SA on the upper side transmitted light obtained from the upper side condensing means 32 is low (less) in each wavelength band than the spectroscopic spectrum SB on the lower side transmitted light obtained from the lower side condensing means 38. The spectroscopic spectrum SA on the upper side transmitted light is less because of, as it is seen from Figure 1, a relation of arrangement in which the upper side condensing means 40 and the lower side condensing means 4 6 are set. There is also a characteristic that the second peak is lower (less) than the first peak.

As shown in Figure 22, a tendril crack (a peduncle crack) is a defect that cannot easilybe seen froman appearance because a crack occurs in the inside of the base of a tendril (the base of a peduncle) to form a hollow and is overlooked in visual inspection.

If the inspection apparatus of the invention is used, a phenomenon peculiar to the defect is detected in the second peak (see Figure 23) of the spectroscopic spectrum SA on the upper side. There is a characteristic that the second peak is higher (more) than the first peak. The spectroscopic spectrum SB on the lower side is a spectrum pattern of the normal fruit and indicates that an apparatus that inspects only on the lower side tends to misjudge that a fruit is a normal fruit. This is a phenomenon overlooked in the conventional technique.

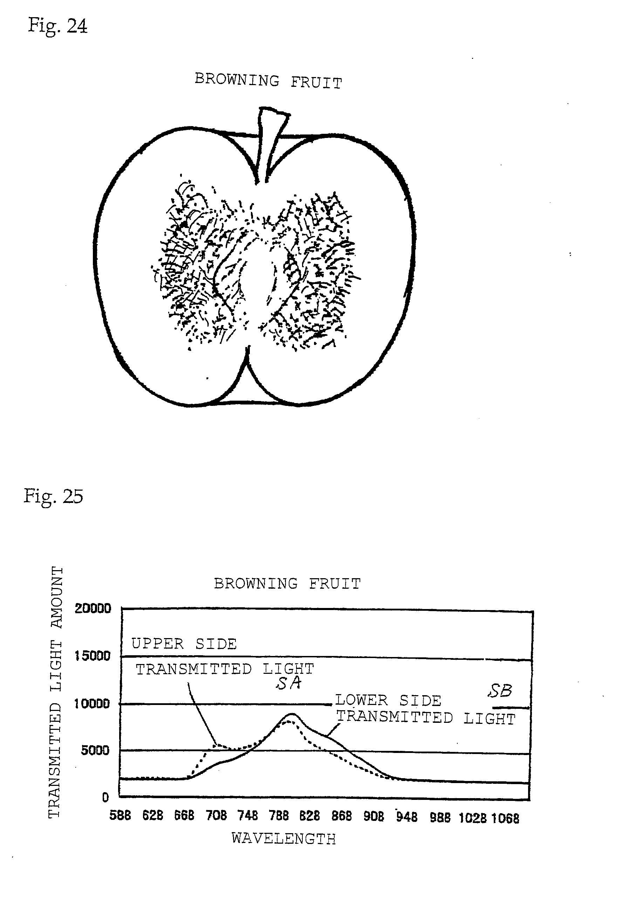

As shown in Figure 24, a browning defective fruit is a defective fruit in which a pulp in the inside turned brown. The defect tends to occur in a part containing nectar and tends to occur because of storage. A spectroscopic spectrum of the browning defective fruit has a characteristic that, as shown in Figure 25, the second peak is higher (more) than the first peak in both the upper and the lower spectroscopic spectra SA and SB.

A change in a degree of browning is large and a change in a transmitted light amount is large for each fruit in the browning defect depending on a difference of an amount of nectar contained. However, since the characteristic that the second peak is higher (more) is the same, the degree of browning and the transmitted light amount are accurately detected.

As shown in Figure 26, a core mold defective fruit is a fruit having a lesion around the center of the fruit or a skin covering a seed. Bacteria enter from a hole of a calyx remaining as a trace of a flower at a fruit top and cause a defect in the inside of the fruit.

A spectroscopic spectrum of the core mode fruit has a characteristic that, as shown in Figure 27, both the upper and the lower spectroscopic spectra SA and SB are equal to each other.

Patterns themselves of the spectra indicate the same pattern as that of the normal fruit. However, whereas the spectroscopic spectrum SB on the lower side is usually higher (more) than the spectroscopic spectrum SA on the upper side, the spectra are in generally the same degree and have a small difference in the respective wavelengths. Thus, the spectra are accurately detected.

This core mold fruit cannot be detected by the conventional inspection. However, the invention for simultaneously detecting upper and lower spectra makes it possible to inspect the core mold fruit.

As shown in Figure 28, a spot-like browning fruit of a pear is a physiological defect that locally occurs in the inside of a pulp of a fruit and is also called "a nectar symptom" or "a pulp browning disease". An organ of a water immersion state like nectar of an apple is generated. Depending on a breed, the spot-like browning occurs in a peach. The spot-like browning fruit cannot be found at all by the visual inspection from an appearance.

A crisis region is unspecified and it is unknown where the spot-like browning occurs even of the fruit is vertically divided into two along an axial core or cut and divided into upper and lower halves along an equator portion. However, according to the apparatus of the invention, it is possible to detect the spot-like browning fruit according to analysis of a spectroscopic spectrum.

### Second embodiment

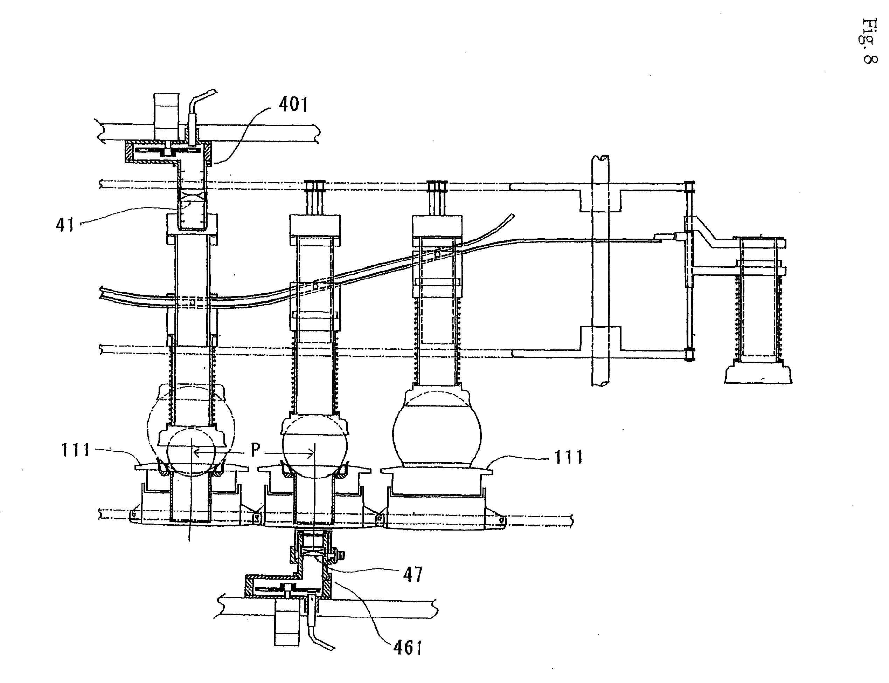

A second embodiment of the invention will be explained on the basis of Figure 8 showing the second embodiment. In this embodiment, upper side condensing means for condensing the transmitted light A and lower side condensing means for condensing the transmitted light B are provided with attachment positions thereof deviated to the front and the rear in a conveying direction.

Details of a saucer 111 of conveying means, upper side condensing means 401, and the lower side condensing means 461 are the same as those in the first embodiment. Detailed explanations thereof are omitted.

As a light shielding cylinder, upper light shieldingmeans, and a disturbance light shielding plate for preventing entrance of disturbance light in the upper side condensing means 401, it is possible to use the same ones as those in other embodiments described later in combination.

A positional deviation interval of the upper side condensing means 401 and the lower side condensing means are shown in Figure 8 according to an attachment interval P of the saucer 111. However, as a range (a dimension) of this positional deviation, the upper side condensing means 401 and the lower side condensingmeans 461 only has to deviate slightly in a range in which a center line (an optical axis) of the upper side condensing lens 41 and a center line (an optical axis) of the lower side condensing lens 47 do not overlap an identical center line.

A sensor driving circuit built in the upper side spectroscopic means A 52 connected to the upper side condensing means 401 and a sensor driving circuit built in the lower side spectroscopic means B 54 connected to the lower side condensing means 461 only have to be set to drive the spectroscopic means by staggering timing according to positional deviation.

### Third Embodiment

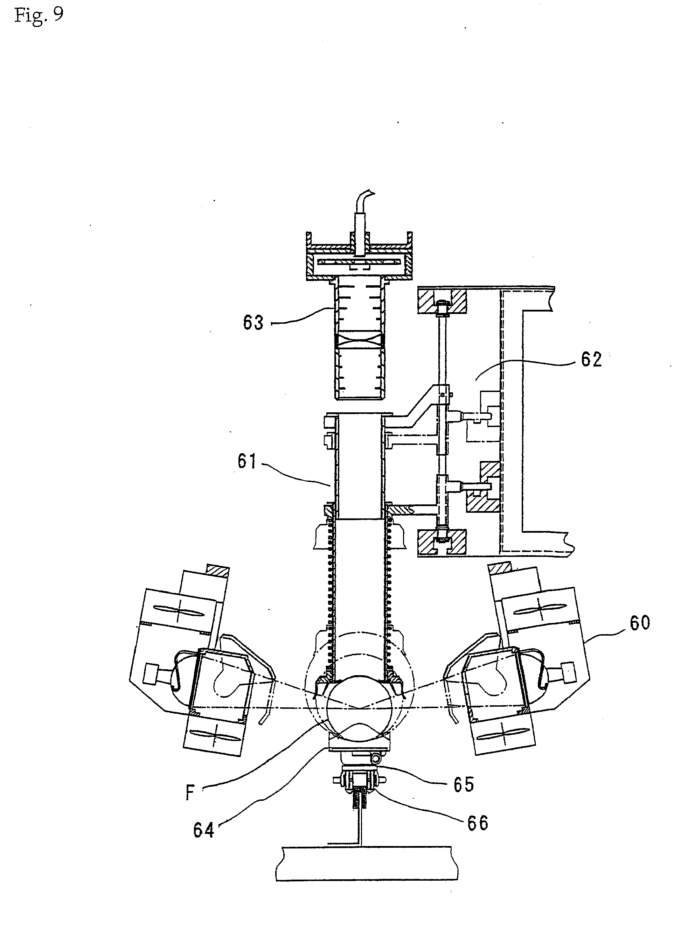

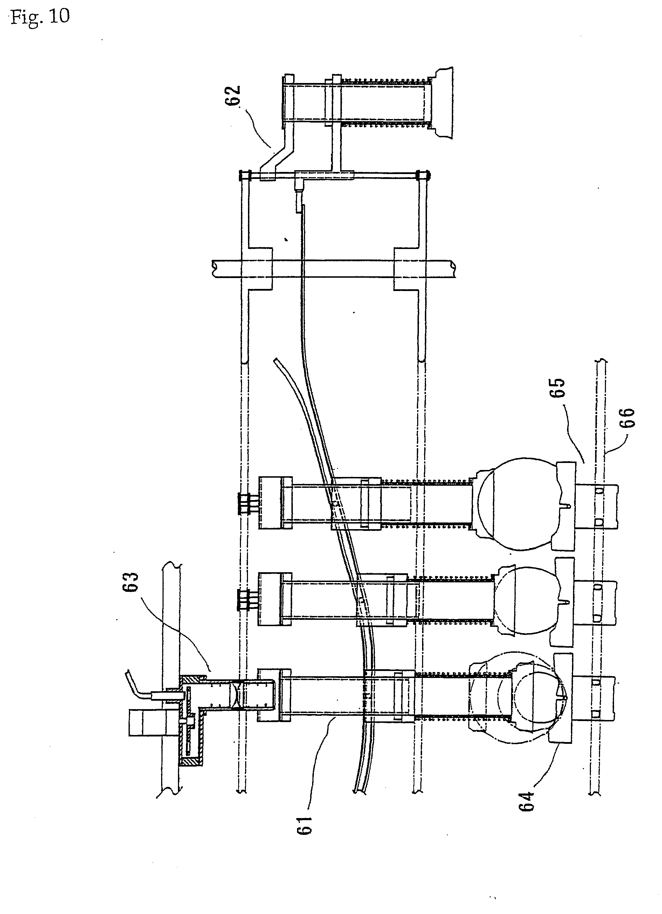

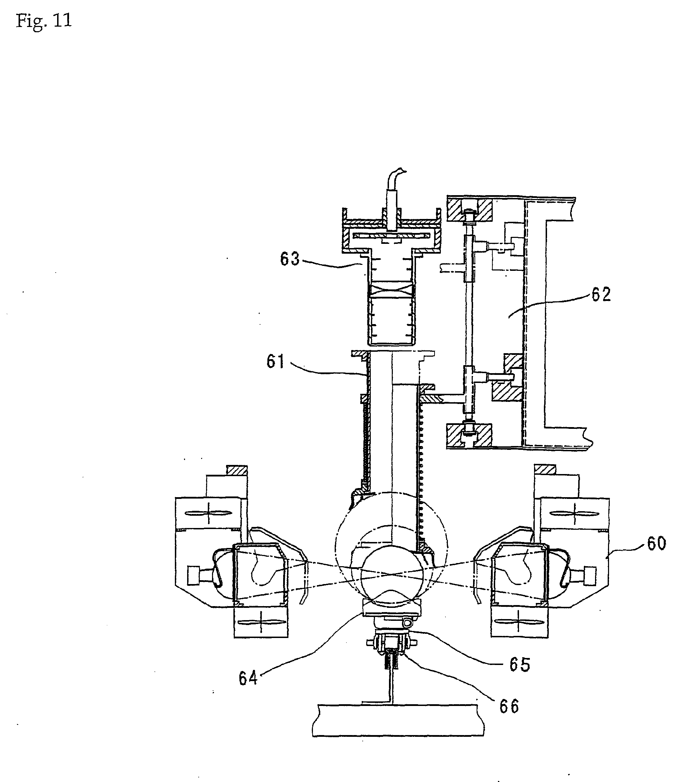

A third embodiment of the invention will be explained on the basis of Figures 9 to 11 showing the third embodiment.

In this embodiment, a light shielding cylinder is synchronously advanced to above an object to cover the object and transmitted light, which is a beam projected from the side and diffused and reflected in the inside of the object, is condensed by upper side condensing means and subjected to spectroscopic analysis to inspect internal qualities.

Floodlighting means 60, upper light shielding means 62 using a light shielding cylinder 61 covering an upper part of the object, and upper side condensing means 63 are the same as those in the first embodiment. Explanations the means are omitted.

Reference numeral 64 denotes a saucer of conveying means. The saucers 64 are attached to a conveyor 65 at predetermined intervals. This saucer 64 may be formed in different other shapes as long as the saucer 64 places objects F thereon one by one and conveys the object F in a state in which the side of the saucer 64 is opened. In other words, the saucer 64 formed to make it possible to project a beam on the object F from the side using the floodlighting means 60.

As this conveyor 65, a conveyor directly attached with the saucer 64 above a one line of conveyor chain 66 is shown. However, Any other conveyor may be used as long as the conveyor can advance the upper light shielding means 62 in synchronization with the saucer 64.

Since the conveyor 65 classifies objects on the basis of an inspection result after the conveyor 65 passes an inspection position, it is preferable to use a saucer having a structure for discharging and classifying the objects in accordance with ranking as the saucer 64.

### Fourth embodiment

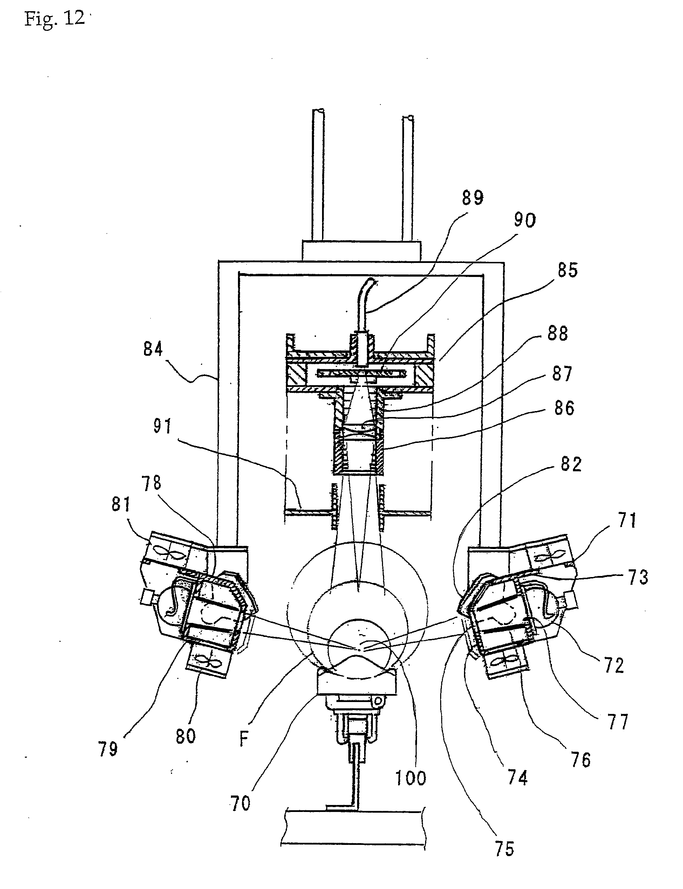

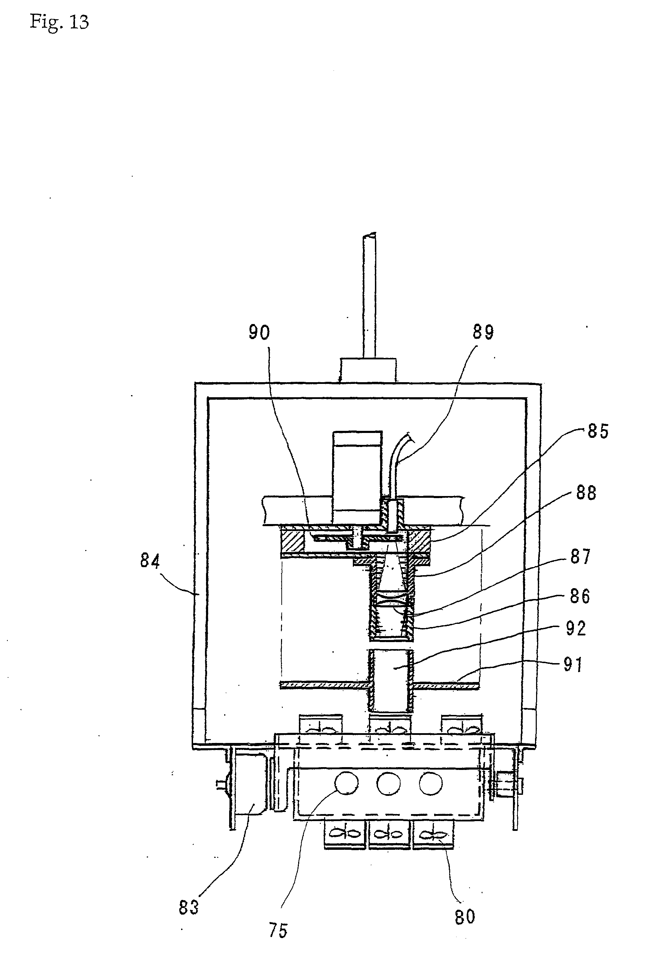

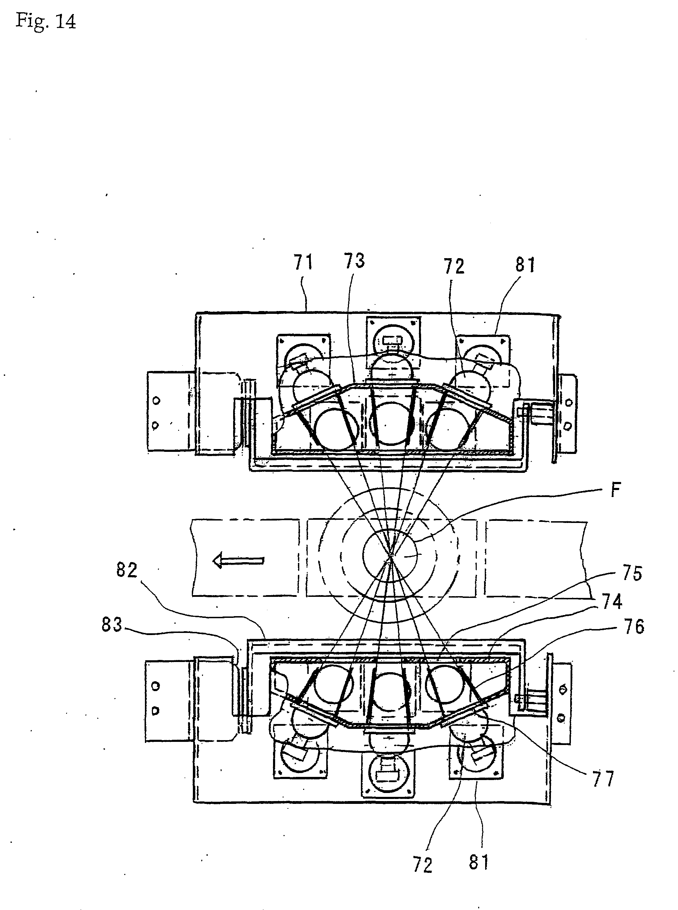

A fourth embodiment of the invention will be explained on the basis of Figures 12 to 14 showing the fourth embodiment. Figure 12 is a sectional explanatory view with a main part fractured. Figure 13 is a side explanatory view of Figure 12. Figure 14 is a plan view of floodlighting means in Figure 13. This embodiment is used when an object is an object through which a beam is easily transmitted, occurrence of diseases and defect or the like hardly seen from an appearance is less, and taste components such as a sugar degree and an acid degree are mainly inspected as internal qualities.

Reference numeral 70 denotes conveying means. Since the conveying means 70 only has to be a conveyor that conveys inspection objects F one by one in a stable posture, it is possible to use various publicly-known conveying means.

Reference numeral 71 denotes floodlighting means. An irradiation box 73 arranged to concentratedly project beams on the object F in the inspection position 100 from both side thereof using a small lamp 72 is provided. A projection window 75 is provided in a light shielding wall 74 on a conveying path side of the irradiation box 73 to project a beam on the object F in the inspection position 100 through this projection window 75. This projection window 7 5 may be a projection window of a rectangular shape elongated in the lateral direction by connecting three holes to form a long hole shape.

Reference numeral 76 denotes a concentrated projection cylinder of a cylindrical shape provided between a lamp attachment hole 77 and the projection window 75. The concentrated projection cylinder 76 is a cylinder having an aperture adjusted to a size of the lamp attachment hole 77, which is adjusted to a size of an opening diameter of a reflecting mirror of the small lamp 72, and a size of the projection window 75. Mirror reflection treatment is applied to the inner surface of the concentrated projection cylinder 76 such that light is mirror-reflected and concentrated.

In the irradiation box 73 formed in this way, respective sides, an upper surface 78, and a lower surface 79 are closed to prevent a beam from leaking to the outside from portions other than the projection window.

Reference numeral 80 denotes an air-cooled blower provided on the lower surface 79 of the irradiation box 73. The air-cooled blower 80 is opened below the concentrated projection cylinder 76 in the irradiation box to radiate heat of the concentrated projection cylinder and heat around the concentrated projection cylinder. Reference numeral 81 denotes a blower attached toward the small lamp 72 attached on the outside on the rear surface of the irradiation box. The blower 81 sends the air to a portion with large heat generation of the lamp and dissipates the heat.

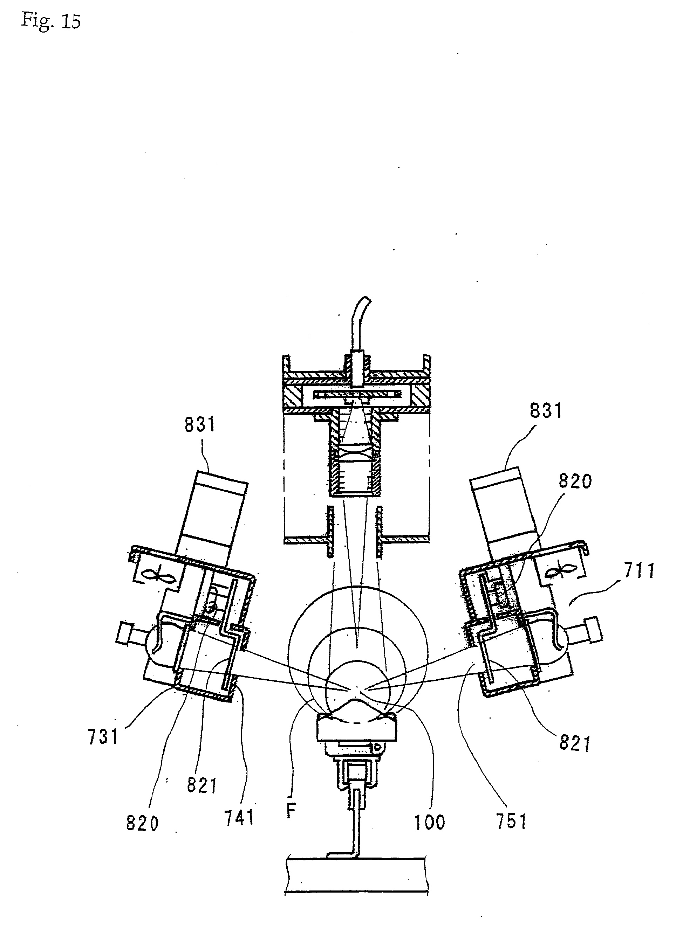

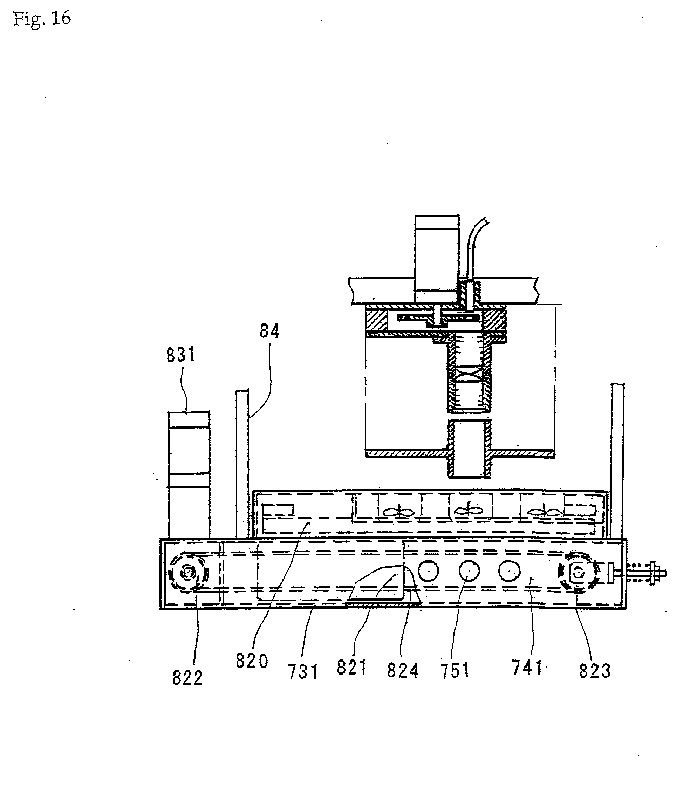

Reference numeral 82 denotes a floodlight shutter that closes and opens the projection window 75. Reference numeral 83 denotes a driving device for the shutter. In this embodiment, a rotary solenoid is used as the driving device 83. A shutter mechanism for closing this projection window 75 may be a mechanism of other structures as long as the mechanism closes the projection window. For example, as shown in Figures 15 and 16, a blind plate is slid in a traveling direction in parallel to a wall surface along a light shielding wall 741 to close the projection windows 75 and 751.

In Figures 15 and 16, a blind plate floodlight shutter 821 is attached to a linear slide rail 820 provided above an irradiation box 731 and slides along an inner side of the light shielding wall 741 of the irradiation box 731. Reference numeral 831 denotes a driving device for the blind plate floodlight shutter 821. A lateral output shaft obtained by combining a bevel gear box with a gear head of a reciprocatingly rotating motor with brake is assembled toward the inside of the irradiation box 731. A drive pulley 822 is provided in this output shaft. A tension pulley 823 is provided at the other end of the irradiation box 731. A part of the blind plate floodlight shutter 821 is coupled to a part of a wire rope 824 wound around both the pulleys and tensed. According to reciprocating rotation of the shutter driving device 831, the blind plate floodlight shutter 821 is pulled by the wire rope 824 and guided by the linear slide rail 820 to reciprocatingly move and close and open the projection window 751.

When the blind plate floodlight shutter 821 on the drive pulley side (Figure 16), the blind plate floodlight shutter 821 opens the projection window 751 and projects a floodlight beam toward an inspection position. When the driving device rotates, the blind plate floodlight shutter 821 is pulled by the wire rope 824 and moves to the tension pulley 823 side to close all the projection windows 751 to block the floodlight beam.

Beams concentratedly projected from small lamps through the projection windows 75 and 751 are intense and projection heat is hot. Thus, if the beams are projected for a fixed time or more while the conveyor is kept stopped, an object or a conveyor band in a place where the beams are projected is burnt or modified by high temperature. In order to prevent this problem, the projection windows 75 and 751 are temporarily closed by the floodlight shutters 82 and 821 to block the projected beams to make it possible to stop the conveyor while the lamps are kept on without turning off the lamps. Reference numeral 84 denotes an attachment frame for the floodlighting means 71 and 711. The irradiation boxes 73 and 731 are inclined and attached to the attachment frames 71 and 711 such that floodlight axes of a pair of left and right floodlighting means 71 are projected toward the inspection position 100 while being inclined downward to the front. In other words, the irradiation boxes 73 and 731 are attached to be inclined downward to the front and irradiate a position closer to a lower part of the side of the object to prevent surface reflected light of a beam irradiated on the inspection object F from directly entering an upper side condensing means 85 provided downward above the inspection position 100 or adversely affecting the upper side condensing means 85 as disturbance light.

When the object F is a small fruit such as a kiwi fruit, the floodlighting means 71 is lowered to near a conveyance surface. When the object F is a medium-sized fruit such as an apple, the floodlighting means 71 is slightly lifted. When the object F is a large fruit such as a melon, the floodlighting means 71 is further lifted. Height is set to a predetermined position for each item according to an average size of an object item. The floodlighting means 71 is lifted and lowered to be positioned by elevating means (not shown) such as a cylinder attached to an upper part of the attachment frame 84.

The upper side condensing means 85 includes main components, namely, a lens holder 88, in which a lens hood 86 and a condensing lens 87 are built, provided downward above the inspection position 100, an optical fiber 89 that guides condensed transmitted light to spectroscopic means, and a light extinction filter attachment plate 90 provided in front of a light incidence surface of this optical fiber. The upper side condensingmeans 85 is the same as the upper side condensing means used in the first to the third embodiments. Detailed explanations of the respective components are omitted.

In Figures 12 and 13, reference numeral 91 denotes a disturbance light shielding plate. The disturbance light shielding plate 91 is attached to a position above the inspection position 100 and in the front below the lens hood 86 in a horizontal state using an attachment member in a part of an external shape of the light receiving means 85. As this disturbance light shielding plate 91, a light shielding plate that has a sight window 92 of a size adjusted to a view of a condensing lens in the center thereof and upper and lower surface of which are subjected to mat treatment to prevent a beam from being absorbed or reflected is used.

The disturbance light shielding plate 91 is formed and attached to prevent a beam floodlighted by the floodlighting means 71 from being radiated on an outer peripheral surface of an object or reflected in the respective directions and secondary reflected light from the periphery or diffuse reflection light due to a beam from the outside from entering the lens hood 86.

As shown in Figures 13 and 18, the light extinction filter attachment plate 90 is attached to a switching actuator that is formed in a disc shape and provided in the side direction of an attaching portion of the optical fiber 89. Since the light extinction filter attachment plate 90 is the same as those in the other embodiments, detailed explanations thereof are omitted. Spectroscopic means guided by the optical fiber 89 is the same as those in the first to the third embodiments. Thus, detailed explanations of the spectroscopic means are omitted.

### Fifth Embodiment

Conveyingmeans that is a fifth embodiment of the invention will be explained on the basis of Figure 17. In Figure 17, a belt conveyor is used as the conveying means. A seat 131 on which the object F is placed is attached to a conveyor belt 660 by providing a through-hole 67 vertically piercing through the conveyor belt 660 to constitute conveying mans having a transmitted light path 123 vertically piercing through the conveyor belt 660.

As the conveying means, the conveyor belt may be replaced with a slat member of a slat chain conveyor. This is a simple structure in which the seat 131 is directly provided in a conveying band (member) itself.

The other components for the conveying means are the same as those in the other embodiments. Thus, explanations of the components are omitted.

### Industrial Applicability

As described above, the online vertical internal quality inspection method and apparatus according to the invention are a method and an apparatus that can inspect, in a nondestructive manner, internal qualities of an inspection object, which is an agricultural product such as a fruit for which judgment on taste components, physiological defects, diseased and defective fruits, and the like of internal qualities is impossible only from an external appearance.

In particular, the method and the apparatus of the invention are capable of classifying diseased and defective fruits that cannot be eaten such as a browning fruit and a core mold fruit and defective fruits that are inferior in appearance because there is a cracked hollow in a cut surface but have taste components such as a sugar degree and an acid degree same as those of a normal fruit and can be eaten. The method and the apparatus are built in sorters in shipment places and sorting, packing, and packaging facilities for fruits and used for classifying the fruits according to quality classifications.

The invention set forth in claim 10 is built in sorters in sorting and packaging facilities of various vegetables and fruits and used as an internal quality inspection apparatus with high reliability that is not affected by disturbance and can inspect an object only from above because an upper surface of an object is covered with a light shielding cylinder to condense transmitted light passing through the cylinder.

The invention set forth in claim 16 is built in sorters in sorting and packaging facilities of vegetables and fruits requiring a large amount of processing and used because transmitted light is condensed through a view window of a disturbance light control plate provided above an inspection position path of an object, a light receiving shutter is unnecessary in condensingmeans because disturbance light does not enter from the outside and, since there is no limitation on a processing ability due to shutter speed in the past, conveyance speed and inspection processing ability are substantially improved, and conveying means is combined with various conveyors that convey the object to the front and the rear at random at unfixed intervals.

### Description of Symbols

- 1, 9: Floodlight lamps
- 2, 6: Objects
- 3, 10: Light receiving means
- 4, 473: Light receiving window
- 5: Shutter
- 7, 11, 64, 111: Saucer
- 8: Transmission path
- 100: Inspection position
- 12, 68: Transmitted light paths
- 121: Transmitted light path entrance
- 122: Transmitted light path exit
- 13, 131: Seats
- 14, 66: Conveyor chain
- 15: Attachment pin
- 16, 60, 71: Floodlighting means
- 17, 72: Small lamps
- 18: Floodlight beam
- 19, 73, 731: Irradiation boxes
- 20, 74, 741: Light shielding walls
- 21, 75, 751: Projection windows
- 22, 221, 222: Floodlight shutters
- 30, 61, 301, 302: Light shielding cylinders
- 30A: Upper side light shielding cylinder
- 31, 312: Pressing seats
- 32, 322: Springs
- 33, 62: Upper light shielding means
- 34: Chain
- 35, 351, 352: Vertical slide shafts
- 36: Fixed bracket
- 37, 371, 372: Vertical slide brackets
- 38: Guide pins
- 39, 391: Guide rails
- 40, 63, 85, 401: Upper side condensing means
- 41, 47, 87: Condensing lenses
- 42, 48, 89: Optical fibers
- 43, 49: Light extinction filter attachment plates
- 44, 50: Combining and attaching units
- 45, 51: Stepping motors
- 46, 461: Lower side condensing means
- 52: Upper side spectroscopic means A
- 53, 55: Package-type spectroscopic sensor units
- 54: Lower side spectroscopic means B
- 56: A/D converter
- 57: Fruit diameter sensor
- 65: Conveyor
- 66: Conveyor chain
- 67: Through-hole
- 68: Transmitted light path
- 70: Conveying means
- 76: Concentrated projection cylinder
- 77: Lamp attachment hole
- 78: Upper surface of irradiation box
- 79: Lower surface of irradiation box
- 80, 81: Air-cooled blowers
- 82: Linear slide rail
- 83, 831: Shutter driving devices
- 84: Attachment frame
- 86, 412, 472: Lens hoods
- 88, 411, 471: Lens holders
- 90: Attachment plate
- 91: Disturbance light shielding plate
- 92: Sight window
- 413: Light receiving window
- 414: Light shielding plate
- 421, 481: Light incidence surfaces
- 431: Filter attachment hole
- 432: Light extinction filter
- 433: Blind
- 451: Output shaft
- 452: Shaft core
- 475: Dust-proof hood
- 476: Connection port
- 422, 482: Light exit side ends
- 531: Light diffusing body
- 532: Photoelectric conversion element
- 534: Electronic cooling element
- 601: Setting display unit
- 602: Data processing unit
- A: Upper side transmitted light
- SA: Upper side spectroscopic spectrum
- B: Lower side transmitted light
- SB: Lower side spectroscopic spectrum
- F: Object
- P: Interval of saucers

## Claims

1. An online internal quality inspection method,
**characterized by** placing inspection objects on conveying means, which has a transmitted light path piercing in a vertical direction in a center thereof and has a seat adhering to an object in an annular shape above the transmitted light path, and conveying the inspection objects one by one, with a predetermined position of a conveyance path set as an inspection position, projecting beams toward below a side of an object using floodlighting means, which uses a large number of small lamps, from both left and right sides of the inspection position, providing upper side condensing means that condenses transmitted light A, which is transmitted through the object and exits upward, downward from above the inspection position and upper side spectroscopic means connected to the upper side condensing means, providing lower side condensing means that condenses transmitted light B, which is transmitted through the object and exits downward, upward near a transmitted light path exit of the seat in the inspection position and lower side spectroscopic means connected to the lower side condensing means, analyzing spectroscopic spectra from the upper side spectroscopic means and the lower side spectroscopic means to detect component values such as a sugar degree and an acid degree and various defects of the object, and comparing the upper and the lower spectroscopic spectra to detect internal qualities and various internal defects of the object from a difference of the spectroscopic spectra.

2. The online internal quality inspection method according to claim 1, **characterized by**, in condensing the transmitted light A exiting to the upper side, synchronously advancing a light shielding cylinder that vertically lowers to, adheres to, and cover an upper part of the object in the inspection position, projecting beams toward the side of the object using the floodlighting means, which uses a large number of small lamps, from both the left and right sides of the inspection position, and obtaining a spectroscopic spectrum on the upper side using the upper side condensing means that condenses the transmitted light A, which is transmitted through the object and exits upward, downward from above the light shielding cylinder in the inspection position and the upper side spectroscopic means connected to the upper side condensing means.

3. The online internal quality inspection method according to claim 1 or 2, **characterized in that** the upper side condensing means and the upper side spectroscopic means connected to the upper side condensing means and the lower side condensing means and the lower side spectroscopic means connected to the lower side condensing means simultaneously receive light, respectively, when the seat having the object placed thereon comes to the inspection position.

4. The online internal quality inspection method according to claim 1 or 2, **characterized in that** the upper side condensing means and the upper side spectroscopic means connected to the upper side condensing means and the lower side condensing means and the lower side spectroscopic means connected to the lower side condensing means are positionally deviated to a front and a rear and receive light by staggering timing for detection on the upper side and detection on the lower side when the seat having the object placed thereon comes to the inspection position.

5. The online internal quality inspection method according to any one of claims 1 to 4, **characterized in that** the upper side spectroscopic means and the lower side spectroscopic means make output values of the spectroscopic spectra proper by changing a light receiving time according to a size of a fruit diameter measured at a pre-stage of the inspection position, analyze the upper and the lower spectroscopic spectra, and detect component analysis values, physiological defects, diseases and defects, and the like from the spectroscopic spectra independently or by comparing the upper and the lower spectroscopic spectra.

6. An online internal quality inspection apparatus,
**characterized by** comprising:
conveying means that has a transmitted light path piercing in a vertical direction in a center thereof and is provided with a seat adhering to an object in an annular shape over the transmitted light path to place inspection objects on the seat and convey the inspection objects one by one;
floodlighting means arranged, with a predetermined position on a conveyance path set as an inspection position, to project beams from different positions and angles toward a side of the object in a range from an obliquely front to an obliquely rear on both left and right sides of the object in the inspection position using plural small lamps provided on both left and right sides of the inspection position, respectively;
upper side condensing means that is provided downward above the inspection position and condenses transmitted light A, which is transmitted through the object and exits upward, and upper side spectroscopic means connected to the upper side condensing means;
lower side condensing means that is provided upward near a transmitted light path exit below the seat in the inspection position and condenses transmitted light B, which is transmitted through the object and exits downward, and lower side spectroscopic means connected to the lower side condensing means; and
an analyzer that has a function of subjecting spectroscopic spectrum data of the transmitted light A obtained from the upper side spectroscopic means and spectroscopic spectrum data of the transmitted light B obtained from the lower side spectroscopic means to spectrum analysis, respectively, and calculating component values such as a sugar degree and an acid degree from upper and lower spectra and detecting various physiological defects and diseases and defects to output a defect degree.

7. The online internal quality inspection apparatus according to claim 6, **characterized in that** a disturbance light control plate having a view window of a condensing lens opened is provided between the upper side condensing means for condensing the transmitted light A and an upper part of the object path in order to prevent entrance of disturbance light in the upper condensing means.

8. An online internal quality inspection apparatus,
**characterized by** comprising:
upper light shielding means that places inspection objects on conveying means, which has a transmitted light path piercing in a vertical direction in a center thereof and has a seat adhering to an object in an annular shape over the transmitted light path, and conveys the inspection objects one by one and advances, with a predetermined position on a conveyance path set as an inspection position, a light shielding cylinder, which vertically lowers to, adheres to, and covers an upper part of the object in the inspection position, synchronously with the conveying means;
floodlighting means arranged to project beams from different positions and angles toward a side of the object in a range from an obliquely front to an obliquely rear on both left and right sides of the object in the inspection position using plural small lamps provided on both left and right sides of the inspection position, respectively;
upper side condensing means that is provided downward to a light shielding cylinder upper portion of the light shielding means above the inspection position and condenses transmitted light A, which is transmitted through the object and exits upward, and upper side spectroscopic means connected to the upper side condensing means;
lower side condensing means that is provided upward near a transmitted light path exit below the seat in the inspection position and condenses transmitted light B, which is transmitted through the object and exits downward, and lower side spectroscopicmeans connectedto the lower side condensing means; and
an analyzer that has a function of subjecting spectroscopic spectrum data of the transmitted lightAobtained from the upper side spectroscopic means and spectroscopic spectrum data of the transmitted light B obtained from the lower side spectroscopic means to spectrum analysis, respectively, and calculating component values such as a sugar degree and an acid degree from upper and lower spectra and detecting various physiological defects and diseases and defects to output a defect degree.

9. The online internal quality inspection apparatus according to any one of claims 6 to 8, **characterized in that** the upper condensing means for condensing the transmitted light A and the lower condensing means for condensing the transmitted light B are provided by being positionally deviated in a conveying direction and condense light with timing for upper side detection and lower side detection staggered when the seat having the object placed thereon comes to the positions of the upper side condensing means and the lower side condensing means.

10. An online internal quality inspection apparatus,
**characterized by** comprising:
conveying means for placing inspection objects thereon and conveying the inspection objects one by one;
floodlighting means for projecting a beam on an object in an inspection position from a side;
upper light shielding means for lowering, from above, a light shielding cylinder, which has an inner diameter smaller than an outer diameter of the object, to the object being conveyed, covering the object with the light shielding cylinder in close contact, and advancing the light shielding cylinder synchronously with the conveying means;
condensing means for condensing transmitted light, which is the projected light transmitted through the object and exiting upward, downward from above;
spectroscopic means connected to the condensing means using an optical fiber; and
an analyzer that analyzes spectroscopic spectrum data of the transmitted light obtained from the spectroscopic means.

11. The online internal quality inspection apparatus according to any one of claims 8 to 10, **characterized in that** the light shielding cylinder of the upper light shielding means is constituted such that a lower end thereof is lowered in the vertical direction to an upper part of the object in the inspection position and the light shielding cylinder is advanced synchronously with the conveying means while being elastically brought into contact with the object according to height of the object.

12. The online internal quality inspection apparatus according to any one of claims 8 to 10, **characterized in that** the light shielding cylinder of the upper light shielding means is constituted such that an upper end thereof is held at height for passing a lens hood of the upper side condensing means near a front end of the lens hood, a lower end thereof is formed in a stretchable structure for lowering vertically from height at which the light shielding cylinder is not in contact with an upper part of the object to a position where the light shielding cylinder adheres to the upper part of the object, the light shielding cylinder is attached to conveying means advanced synchronously with the light shielding cylinder, a guide rail for elevating a stretchable part of the light shielding cylinder in the vertical direction along a route of the conveying means is provided, and the lower end of the light shielding cylinder is advanced synchronously with the object while being caused to adhere to the object according to height of the object.

13. The online internal quality inspection apparatus according to claim 12, **characterized in that**, as the light shielding cylinder stretchable structure of the upper light shielding means, a light shielding cylinder stretchable in a double cylinder form of an outer cylinder and an inner cylinder having different sectional sizes is constituted.

14. The online internal quality inspection apparatus according to claim 12, **characterized in that**, as the light shielding cylinder stretchable structure of the upper light shielding means, a light shielding cylinder stretchable by bellows is constituted.

15. The online internal quality inspection apparatus according to any one of claims 6 to 14, **characterized in that** a lamp box of the floodlighting means has a light shielding wall on the object conveyance path side, a projection window is provided in a wall surface in a position where a floodlight axis connecting the inspection position and the floodlight lamp, and a beam is projected on the object through the projection window.

16. An online internal quality inspection apparatus,
**characterized by** comprising:
conveying means for conveying inspection objects one by one;
floodlighting means for projecting a beam on an object in an inspection position from a side;
condensing means for condensing transmitted light, which is the projected ray transmitted through the object, downward from above the inspection position; and
a disturbance light shielding plate, which has a visual field window of a condensing lens opened, provided between a lens hood of the condensing means and an upper part of an object path in order to prevent entrance of disturbance light in the condensing means, and that
the floodlighting means is constituted such that the floodlighting means is arranged to project beans from different positions and angles toward below a side of the object using plural small lamps provided respectively on both left and right sides of a conveyance path, an irradiation box surrounding the lamps to prevent diffused light from the lamps from being diffused and projected upward is provided, the irradiation box has a light shielding wall on the object conveyance path side, a projection window is provided in the light shielding wall in a position where a floodlight axis connecting the inspection position and the floodlight lamp, a ray is projected toward a predetermined position of height of the object through the projection window while being inclined downward to a front, and the transmitted light condensed by the condensing means is guided to the spectroscopic means using an optical fiber.

17. The online internal quality inspection apparatus according to claim 16, **characterized in that** the floodlighting means is constituted such that a concentrated projection cylinder of a cylinder shape is provided from a reflecting mirror front surface opening of each of the small lamps to the projection window of the conveyance path side light shielding wall to concentratedly project light of the lamps along the floodlight axis individually.

18. The online internal quality inspection apparatus according to any one of claims 6 to 16, **characterized in that** the spectroscopic means is constituted using a small package spectroscopic sensor unit that outputs spectroscopic spectrum data in a structure in which a light exit end of an optical fiber combined and connected to the condensing means is formed in a flat shape and a light diffusing body, a continuous variable interference filter, and a photoelectric conversion element are combined and sealed on a facet of the optical fiber in this order.

19. The online internal quality inspection apparatus according to claim 18, **characterized in that**, as the small package spectroscopic sensor unit of the spectroscopic means, a driving circuit is constituted by combining an electron cooling element with a photoelectric conversion element.
